# EUROPEAN PATENT APPLICATION

(11) **EP 4 683 419 A1**
(43) Date of publication of application: **21.01.2026**
(21) Application number: 24797286.2
(22) Date of filing: 25.03.2024
(51) Int. Cl.: H04W 72/50, H04W 72/04, H04L 5/00, H04L 27/26, H04W 74/04, H04W 84/12

(54) **METHOD AND DEVICE FOR ALLOCATING TXOP INTERVALS FOR MULTIPLE USERS IN WIRELESS LAN SYSTEM**

(30) Priority: 24.04.2023 KR 20230053542
(71) Applicant: LG ELECTRONICS INC., Yeongdeungpo-gu Seoul 07336 (KR)
(72) Inventor: KIM, Geonhwan, Seoul 06772 (KR); JANG, Insun, Seoul 06772 (KR); CHOI, Jinsoo, Seoul 06772 (KR); BAEK, Sunhee, Seoul 06772 (KR); YOON, Yelin, Seoul 06772 (KR)
(74) Representative: Frenkel, Matthias Alexander
(86) International application number: PCT/KR2024/003680
(87) International publication number: WO 2024/225624

(57) **Abstract**

According to an embodiment of the present disclosure, a method performed by an access point (AP) in a wireless local area network (LAN) system comprises the steps of: acquiring a transmission opportunity (TXOP); transmitting a TXOP sharing (TXS) trigger frame for allocating transmissions o f a plurality of stations (STAs) in a TXOP interval related to the TXOP; identifying that transmission of at least one STA among the plurality of STAs has not been performed; identifying a remaining TXOP interval after transmission of one or more remaining STAs other than the at least one STA among the plurality of STAs is performed in the TXOP interval; and transmitting a trigger frame for reallocating transmission of the at least one STA i n the remaining TXOP interval.

## Description

### Technical Field

The present disclosure is related to transmission opportunity (TXOP) duration allocation for multi-user in wireless LAN system.

### Background Art

Wireless local area networks (WLANs) have been improved in various ways. For example, the IEEE 802.11ax standard proposed an improved communication environment using orthogonal frequency division multiple access (OFDMA) and downlink multi-user multiple input, multiple output (DL MU MIMO) techniques.

The present disclosure proposes technical features that can be utilized in a new communication standard. For example, the new communication standard may be the Extreme High Throughput (EHT) standard, which is currently under discussion. The EHT standard may utilize newly proposed increased bandwidth, an improved PHY layer protocol data unit (PPDU) structure, improved sequences, and a Hybrid Automatic Repeat Request (HARQ) technique. The EHT standard may also be referred to as the IEEE 802.1 The standard.

In a wireless LAN system, TXOP sharing may be supported. In a TXOP sharing procedure, a scheduled STA may i) transmit to an associated AP, and/or ii) transmit to another STA. TXOP sharing may be supported for both single user and multiple users, and TXOP duration may be allocated to multiple users.

### Disclosure of Invention

### Technical Problem

An aspect of the present disclosure is to provide method and apparatus for TXOP duration allocation for multi-user in wireless LAN system.

### Solution to Problem

According to an embodiment of the present disclosure, a method performed by an access point (AP) in a wireless local area network (LAN) system comprises: obtaining a transmission opportunity (TXOP); transmitting a TXOP sharing (TXS) trigger frame for allocating transmissions of a plurality of stations (STAs) in a TXOP duration related to the TXOP; identifying that transmission of at least one STA among the plurality of STAs has not been performed; identifying a residual TXOP duration after transmissions of remaining one or more STAs other than the at least one STA among the plurality of STAs have been performed in the TXOP duration; and transmitting a trigger frame for reallocating transmission of the at least one STA in the residual TXOP duration.

According to an embodiment of the present disclosure, an access point (AP) in a wireless local area network (LAN) system comprises: a transceiver; a memory; and at least one processor operatively coupled to the transceiver and the memory, wherein the memory stores instructions that, based on being executed by the at least one processor, perform operations comprising: obtaining a transmission opportunity (TXOP); transmitting a TXOP sharing (TXS) trigger frame for allocating transmissions of a plurality of stations (STAs) in a TXOP duration related to the TXOP; identifying that transmission of at least one STA among the plurality of STAs has not been performed; identifying a residual TXOP duration after transmissions of remaining one or more STAs other than the at least one STA among the plurality of STAs have been performed in the TXOP duration; and transmitting a trigger frame for reallocating transmission of the at least one STA in the residual TXOP duration.

According to an embodiment of the present disclosure, an apparatus configured to operate in a wireless local area network (LAN) system comprises: at least one processor; and at least one memory operatively coupled to the at least one processor, wherein the at least one memory stores instructions that, based on being executed by the at least one processor, perform operations comprising: obtaining a transmission opportunity (TXOP); transmitting a TXOP sharing (TXS) trigger frame for allocating transmissions of a plurality of stations (STAs) in a TXOP duration related to the TXOP; identifying that transmission of at least one STA among the plurality of STAs has not been performed; identifying a residual TXOP duration after transmissions of remaining one or more STAs other than the at least one STA among the plurality of STAs have been performed in the TXOP duration; and transmitting a trigger frame for reallocating transmission of the at least one STA in the residual TXOP duration.

According to an embodiment of the present disclosure, a non-transitory computer readable medium (CRM) has stored thereon a program code implementing instructions that, based on being executed by at least one processor, perform operations comprising: obtaining a transmission opportunity (TXOP); transmitting a TXOP sharing (TXS) trigger frame for allocating transmissions of a plurality of stations (STAs) in a TXOP duration related to the TXOP; identifying that transmission of at least one STA among the plurality of STAs has not been performed; identifying a residual TXOP duration after transmissions of remaining one or more STAs other than the at least one STA among the plurality of STAs have been performed in the TXOP duration; and transmitting a trigger frame for reallocating transmission of the at least one STA in the residual TXOP duration.

According to an embodiment of the present disclosure, a station (STA) in a wireless local area network (LAN) system comprises: a transceiver; a memory; and at least one processor operatively coupled to the transceiver and the memory, wherein the memory stores instructions that, based on being executed by the at least one processor, perform operations comprising: receiving, from an access point (AP), a trigger frame indicating an allocation duration for the STA; and performing transmission during the allocation duration, wherein the AP is configured to: transmit a transmission opportunity (TXOP) sharing (TXS) trigger frame for allocating transmissions of a plurality of STAs including the STA during a TXOP duration; identify that transmission of at least one STA including the STA among the plurality of STAs has not been performed; and identify a residual TXOP duration after transmissions of remaining one or more STAs other than the at least one STA among the plurality of STAs have been performed in the TXOP duration, wherein the allocation duration for the STA is allocated within the residual TXOP duration.

According to an embodiment of the present disclosure, a method performed by a station (STA) in a wireless local area network (LAN) system comprises: receiving, from an access point (AP), a trigger frame indicating an allocation duration for the STA; and performing transmission during the allocation duration, wherein the AP is configured to: transmit a transmission opportunity (TXOP) sharing (TXS) trigger frame for allocating transmissions of a plurality of STAs including the STA during a TXOP duration; identify that transmission of at least one STA including the STA among the plurality of STAs has not been performed; and identify a residual TXOP duration after transmissions of remaining one or more STAs other than the at least one STA among the plurality of STAs have been performed in the TXOP duration, wherein the allocation duration for the STA is allocated within the residual TXOP duration.

### Advantageous Effect

The present disclosure may have various advantageous effects.

For example, according to the residual TXOP duration reallocation method proposed in the present disclosure, the AP can reallocate the residual TXOP duration that may occur within the current TXOP duration to the STA (where the CTS failure occurred) without the need to acquire a new TXOP, thereby supporting more efficient triggered TXOP sharing.

Advantageous effects which can be obtained through specific embodiments of the present disclosure are not limited to the advantageous effects listed above. For example, there may be a variety of technical effects that a person having ordinary skill in the related art can understand and/or derive from the present disclosure. Accordingly, the specific effects of the present disclosure are not limited to those explicitly described herein, but may include various effects that may be understood or derived from the technical features of the present disclosure.

### Brief Description of Drawings

FIG. 1 shows an example of a transmitting apparatus and/or receiving apparatus of the present disclosure.
FIG. 2 is a conceptual view illustrating the structure of a wireless local area network (WLAN).
FIG. 3 illustrates a general link setup process.
FIG. 4 shows an example of a multi-link (ML).
FIG. 5 shows an example of a physical protocol data unit or physical layer (PHY) protocol data unit (PPDU) transmitted/received by an STA of the present disclosure.
FIG. 6 illustrates the layout of resource units (RUs) used for a 20 MHz PPDU.
FIG. 7 illustrates the layout of resource units (RUs) used for 40MHz PPDU.
FIG. 8 illustrates the layout of resource units (RUs) used for an 80MHz PPDU.
FIG. 9 shows an operation related to UL-MU.
FIG. 10 illustrates an example of channels used/supported/defined within the 2.4 GHz band.
FIG. 11 illustrates an example of channels used/supported/defined within the 5 GHz band.
FIG. 12 illustrates an example of channels used, supported, and defined within the 6 GHz band.
FIG. 13 shows a modified example of a transmitting device and/or a receiving device of the present disclosure.
FIG. 14 shows an example of a procedure related to RTS/CTS transmission.
FIG. 15 shows an example of the value of the TXOP Sharing Mode subfield.
FIG. 16 shows an example of operation when the TXOP Shared Mode subfield has a value of 2.
FIG. 17 shows an example of the User Info Field format of the MU-RTS TXS TF.
FIG. 18 shows an example of a CTS failure. The situation in FIG. 18 corresponds to situation A above.
FIG. 19 shows an example of a case in which a TXOP return is indicated.
FIG. 20 shows an example of a method performed by an AP for reallocating residual TXOP duration according to an embodiment of the present disclosure.
FIG. 21 shows an example of a signal flow between AP and STA for reallocating residual TXOP duration according to an embodiment of the present disclosure.
FIG. 22 shows an example of a method for configuring a user information field according to an embodiment of the present disclosure.
FIG. 23 shows an example of a method for reallocating residual TXOP durations based on an MU-RTS TXS TF according to an embodiment of the present disclosure.
FIG. 24 shows an example of a method for reallocating the residual TXOP duration based on a basic trigger frame, according to an embodiment of the present disclosure.
FIG. 25 shows an example of a case where a residual TXOP duration occurs due to a CTS failure in the individual triggering method according to an embodiment of the present disclosure.
FIG. 26 shows an example of reallocating a residual TXOP duration resulting from a CTS failure in an individual triggering scheme according to an embodiment of the present disclosure.

### Mode for the Invention

In the present disclosure, "A or B" may mean "only A", "only B" or "both A and B". In other words, in the present disclosure, "A or B" may be interpreted as "A and/or B". For example, in the present disclosure, "A, B, or C" may mean "only A", "only B", "only C", or "any combination of A, B, C".

A slash (/) or comma used in the present disclosure may mean "and/or". For example, "A/B" may mean "A and/or B". Accordingly, "A/B" may mean "only A", "only B", or "both A and B". For example, "A, B, C" may mean "A, B, or C".

In the present disclosure, "at least one of A and B" may mean "only A", "only B", or "both A and B". In addition, in the present disclosure, the expression "at least one of A or B" or "at least one of A and/or B" may be interpreted as "at least one of A and B".

In addition, a parenthesis used in the present disclosure may mean "for example". Specifically, when indicated as "control information (UHR-signal field)", it may mean that "UHR-signal field" is proposed as an example of the "control information". In other words, the "control information" of the present disclosure is not limited to "UHR-signal field", and "UHR-signal field" may be proposed as an example of the "control information". In addition, when indicated as "control information (i.e., UHR-signal field)", it may also mean that "UHR-signal field" is proposed as an example of the "control information".

Also, "a/an" as used in this disclosure can mean "at least one" or "one or more." Also, a term ending with "(s)" can mean "at least one" or "one or more."

Also, the expressions "based on" or "on the basis of" or "according to" as used in this disclosure mean "based at least in part on," and do not mean "based sonly on."

Technical features described individually in one figure in the present disclosure may be individually implemented, or may be simultaneously implemented.

The following example of the present disclosure may be applied to various wireless communication systems. For example, the following example of the present disclosure may be applied to a wireless local area network (WLAN) system. For example, the present disclosure may be applied to the IEEE 802.11a/g/n/ac/ax/be/bn standard. In addition, an example of the present disclosure can also be applied to a next-generation wireless LAN standard that enhances the Ultra High Reliability (UHR) standard or IEEE 802.11bn. In addition, the example of the present disclosure may also be applied to a new WLAN standard enhanced from the EHT standard or the IEEE 802.11be standard. In addition, the example of the present disclosure may be applied to a mobile communication system. For example, it may be applied to a mobile communication system based on long term evolution (LTE) depending on a 3rd generation partnership project (3GPP) standard and based on evolution of the LTE. In addition, the example of the present disclosure may be applied to a communication system of a 5G NR standard based on the 3GPP standard.

Hereinafter, in order to describe a technical feature of the present disclosure, a technical feature applicable to the present disclosure will be described.

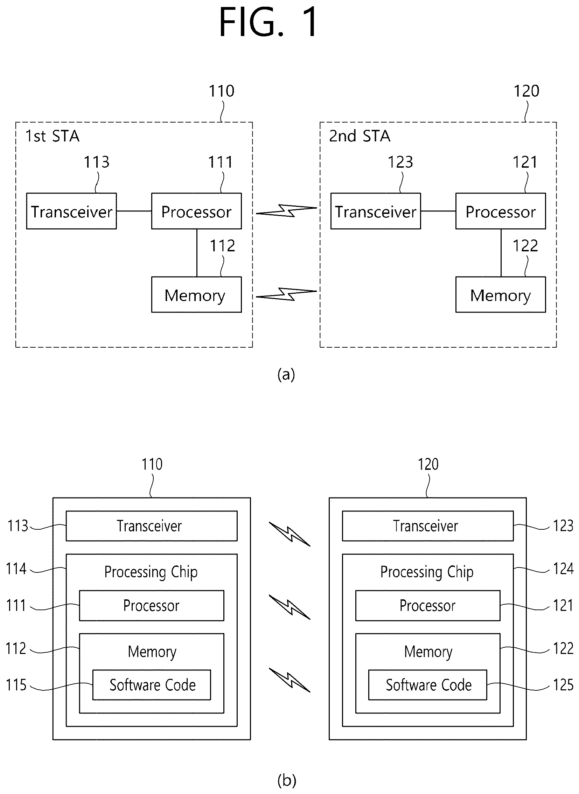

FIG. 1 shows an example of a transmitting apparatus and/or receiving apparatus of the present disclosure.

In the example of FIG. 1, various technical features described below may be performed. FIG. 1 relates to at least one station (STA). For example, STAs 110 and 120 of the present disclosure may also be called in various terms such as a mobile terminal, a wireless device, a wireless transmit/receive unit (WTRU), a user equipment (UE), a mobile station (MS), a mobile subscriber unit, or simply a user. The STAs 110 and 120 of the present disclosure may also be called in various terms such as a network, a base station, a node-B, an access point (AP), a repeater, a router, a relay, or the like. The STAs 110 and 120 of the present disclosure may also be referred to as various names such as a receiving apparatus, a transmitting apparatus, a receiving STA, a transmitting STA, a receiving device, a transmitting device, or the like.

For example, the STAs 110 and 120 may serve as an AP or a non-AP. That is, the STAs 110 and 120 of the present disclosure may serve as the AP and/or the non-AP. In the present disclosure, the AP may be indicated as an AP STA.

The STAs 110 and 120 of the present disclosure may support various communication standards together in addition to the IEEE 802.11 standard. For example, a communication standard (e.g., LTE, LTE-A, 5G NR standard) or the like based on the 3GPP standard may be supported. In addition, the STA of the present disclosure may be implemented as various devices such as a mobile phone, a vehicle, a personal computer, or the like. In addition, the STA of the present disclosure may support communication for various communication services such as voice calls, video calls, data communication, and self-driving (autonomous-driving), or the like.

The STAs 110 and 120 of the present disclosure may include a medium access control (MAC) conforming to the IEEE 802.11 standard and a physical layer interface for a radio medium.

The STAs 110 and 120 will be described below with reference to a sub-figure (a) of FIG. 1.

The first STA 110 may include a processor 111, a memory 112, and a transceiver 113. The illustrated process, memory, and transceiver may be implemented individually as separate chips, or at least two blocks/functions may be implemented through a single chip.

The transceiver 113 of the first STA performs a signal transmission/reception operation. Specifically, an IEEE 802.11 packet (e.g., IEEE 802.11a/b/g/n/ac/ax/be, etc.) may be transmitted/received.

For example, the first STA 110 may perform an operation intended by an AP. For example, the processor 111 of the AP may receive a signal through the transceiver 113, process a reception (RX) signal, generate a transmission (TX) signal, and provide control for signal transmission. The memory 112 of the AP may store a signal (e.g., RX signal) received through the transceiver 113, and may store a signal (e.g., TX signal) to be transmitted through the transceiver.

For example, the second STA 120 may perform an operation intended by a non-AP STA. For example, a transceiver 123 of a non-AP performs a signal transmission/reception operation. Specifically, an IEEE 802.11 packet (e.g., IEEE 802.11a/b/g/n/ac/ax/be packet, etc.) may be transmitted/received.

For example, a processor 121 of the non-AP STA may receive a signal through the transceiver 123, process an RX signal, generate a TX signal, and provide control for signal transmission. A memory 122 of the non-AP STA may store a signal (e.g., RX signal) received through the transceiver 123, and may store a signal (e.g., TX signal) to be transmitted through the transceiver.

For example, an operation of a device indicated as an AP in the disclosure described below may be performed in the first STA 110 or the second STA 120. For example, if the first STA 110 is the AP, the operation of the device indicated as the AP may be controlled by the processor 111 of the first STA 110, and a related signal may be transmitted or received through the transceiver 113 controlled by the processor 111 of the first STA 110. In addition, control information related to the operation of the AP or a TX/RX signal of the AP may be stored in the memory 112 of the first STA 110. In addition, if the second STA 120 is the AP, the operation of the device indicated as the AP may be controlled by the processor 121 of the second STA 120, and a related signal may be transmitted or received through the transceiver 123 controlled by the processor 121 of the second STA 120. In addition, control information related to the operation of the AP or a TX/RX signal of the AP may be stored in the memory 122 of the second

STA 120.

For example, in the disclosure described below, an operation of a device indicated as a non-AP (or user-STA) may be performed in the first STA 110 or the second STA 120. For example, if the second STA 120 is the non-AP, the operation of the device indicated as the non-AP may be controlled by the processor 121 of the second STA 120, and a related signal may be transmitted or received through the transceiver 123 controlled by the processor 121 of the second STA 120. In addition, control information related to the operation of the non-AP or a TX/RX signal of the non-AP may be stored in the memory 122 of the second STA 120. For example, if the first STA 110 is the non-AP, the operation of the device indicated as the non-AP may be controlled by the processor 111 of the first STA 110, and a related signal may be transmitted or received through the transceiver 113 controlled by the processor 111 of the first STA 110. In addition, control information related to the operation of the non-AP or a TX/RX signal of the non-AP may be stored in the memory 112 of the first STA 110.

In the disclosure described below, a device called a (transmitting/receiving) STA, a first STA, a second STA, an STA1, an STA2, an AP, a first AP, a second AP, an AP1, an AP2, a (transmitting/receiving) terminal, a (transmitting/receiving) device, a (transmitting/receiving) apparatus, a network, or the like may imply the STAs 110 and 120 of FIG. 1. For example, a device indicated as, without a specific reference numeral, the (transmitting/receiving) STA, the first STA, the second STA, the STA1, the STA2, the AP, the first AP, the second AP, the AP1, the AP2, the (transmitting/receiving) terminal, the (transmitting/receiving) device, the (transmitting/receiving) apparatus, the network, or the like may imply the STAs 110 and 120 of FIG. 1. For example, in the following example, an operation in which various STAs transmit/receive a signal (e.g., a PPDU) may be performed in the transceivers 113 and 123 of FIG. 1. In addition, in the following example, an operation in which various STAs generate a TX/RX signal or perform data processing and computation in advance for the TX/RX signal may be performed in the processors 111 and 121 of FIG. 1. For example, an example of an operation for generating the TX/RX signal or performing the data processing and computation in advance may include: 1) an operation of determining/obtaining/configuring/computing/decoding/encoding bit information of a sub-field (SIG, STF, LTF, Data) included in a PPDU; 2) an operation of determining/configuring/obtaining a time resource or frequency resource (e.g., a subcarrier resource) or the like used for the sub-field (SIG, STF, LTF, Data) included the PPDU; 3) an operation of determining/configuring/obtaining a specific sequence (e.g., a pilot sequence, an STF/LTF sequence, an extra sequence applied to SIG) or the like used for the sub-field (SIG, STF, LTF, Data) field included in the PPDU; 4) a power control operation and/or power saving operation applied for the STA; and 5) an operation related to determining/obtaining/configuring/decoding/encoding or the like of an ACK signal. In addition, in the following example, a variety of information used by various STAs for determining/obtaining/configuring/computing/decoding/decoding a TX/RX signal (e.g., information related to a field/subfield/control field/parameter/power or the like) may be stored in the memories 112 and 122 of FIG. 1.

The aforementioned device/STA of the sub-figure (a) of FIG. 1 may be modified as shown in the sub-figure (b) of FIG. 1. Hereinafter, the STAs 110 and 120 of the present disclosure will be described based on the sub-figure (b) of FIG. 1.

For example, the transceivers 113 and 123 illustrated in the sub-figure (b) of FIG. 1 may perform the same function as the aforementioned transceiver illustrated in the sub-figure (a) of FIG. 1. For example, processing chips 114 and 124 illustrated in the sub-figure (b) of FIG. 1 may include the processors 111 and 121 and the memories 112 and 122. The processors 111 and 121 and memories 112 and 122 illustrated in the sub-figure (b) of FIG. 1 may perform the same function as the aforementioned processors 111 and 121 and memories 112 and 122 illustrated in the sub-figure (a) of FIG. 1.

A mobile terminal, a wireless device, a wireless transmit/receive unit (WTRU), a user equipment (UE), a mobile station (MS), a mobile subscriber unit, a user, a user STA, a network, a base station, a Node-B, an access point (AP), a repeater, a router, a relay, a receiving unit, a transmitting unit, a receiving STA, a transmitting STA, a receiving device, a transmitting device, a receiving apparatus, and/or a transmitting apparatus, which are described below, may imply the STAs 110 and 120 illustrated in the sub-figure (a)/(b) of FIG. 1, or may imply the processing chips 114 and 124 illustrated in the sub-figure (b) of FIG. 1. That is, a technical feature of the present disclosure may be performed in the STAs 110 and 120 illustrated in the sub-figure (a)/(b) of FIG. 1, or may be performed only in the processing chips 114 and 124 illustrated in the sub-figure (b) of FIG. 1. For example, a technical feature in which the transmitting STA transmits a control signal may be understood as a technical feature in which a control signal generated in the processors 111 and 121 illustrated in the sub-figure (a)/(b) of FIG. 1 is transmitted through the transceivers 113 and 123 illustrated in the sub-figure (a)/(b) of FIG. 1. Alternatively, the technical feature in which the transmitting STA transmits the control signal may be understood as a technical feature in which the control signal to be transferred to the transceivers 113 and 123 is generated in the processing chips 114 and 124 illustrated in the sub-figure (b) of FIG. 1.

For example, a technical feature in which the receiving STA receives the control signal may be understood as a technical feature in which the control signal is received by means of the transceivers 113 and 123 illustrated in the sub-figure (a) of FIG. 1. Alternatively, the technical feature in which the receiving STA receives the control signal may be understood as the technical feature in which the control signal received in the transceivers 113 and 123 illustrated in the sub-figure (a) of FIG. 1 is obtained by the processors 111 and 121 illustrated in the sub-figure (a) of FIG. 1. Alternatively, the technical feature in which the receiving STA receives the control signal may be understood as the technical feature in which the control signal received in the transceivers 113 and 123 illustrated in the sub-figure (b) of FIG. 1 is obtained by the processing chips 114 and 124 illustrated in the sub-figure (b) of FIG. 1.

Referring to the sub-figure (b) of FIG. 1, software codes 115 and 125 may be included in the memories 112 and 122. The software codes 115 and 126 may include instructions for controlling an operation of the processors 111 and 121. The software codes 115 and 125 may be included as various programming languages.

The processors 111 and 121 or processing chips 114 and 124 of FIG. 1 may include an application-specific integrated circuit (ASIC), other chipsets, a logic circuit and/or a data processing device. The processor may be an application processor (AP). For example, the processors 111 and 121 or processing chips 114 and 124 of FIG. 1 may include at least one of a digital signal processor (DSP), a central processing unit (CPU), a graphics processing unit (GPU), and a modulator and demodulator (modem). For example, the processors 111 and 121 or processing chips 114 and 124 of FIG. 1 may be SNAPDRAGONTM series of processors made by Qualcomm^{®}, EXYNOSTM series of processors made by Samsung^{®}, A series of processors made by Apple^{®}, HELIOTM series of processors made by MediaTek^{®}, ATOMTM series of processors made by Intel^{®} or processors enhanced from these processors.

In the present disclosure, an uplink may imply a link for communication from a non-AP STA to an AP STA, and an uplink PPDU/packet/signal or the like may be transmitted through the uplink. In addition, in the present disclosure, a downlink may imply a link for communication from the AP STA to the non-AP STA, and a downlink PPDU/packet/signal or the like may be transmitted through the downlink.

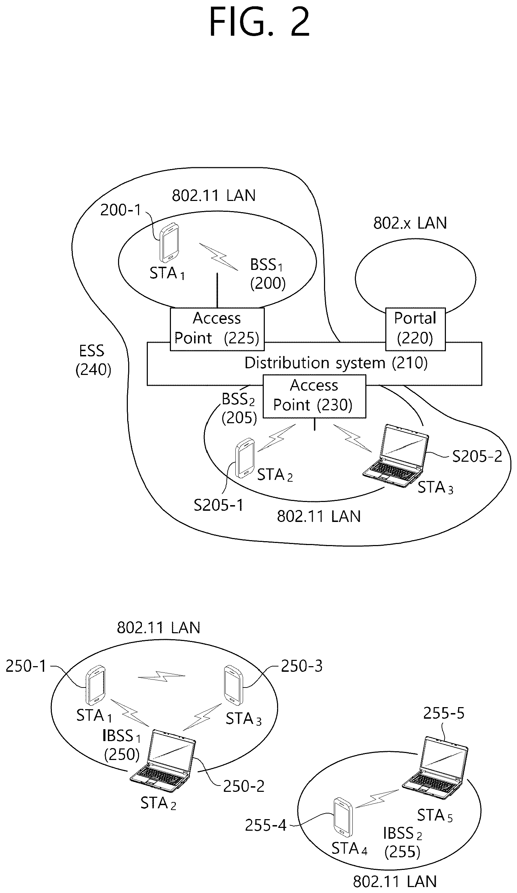

FIG. 2 is a conceptual view illustrating the structure of a wireless local area network (WLAN).

An upper part of FIG. 2 illustrates the structure of an infrastructure basic service set (BSS) of institute of electrical and electronic engineers (IEEE) 802.11.

Referring the upper part of FIG. 2, the wireless LAN system may include one or more infrastructure BSSs 200 and 205 (hereinafter, referred to as BSS). The BSSs 200 and 205 as a set of an AP and an STA such as an access point (AP) 225 and a station (STA1) 200-1 which are successfully synchronized to communicate with each other are not concepts indicating a specific region. The BSS 205 may include one or more STAs 205-1 and 205-2 which may be joined to one AP 230.

The BSS may include at least one STA, APs providing a distribution service, and a distribution system (DS) 210 connecting multiple APs.

The distribution system 210 may implement an extended service set (ESS) 240 extended by connecting the multiple BSSs 200 and 205. The ESS 240 may be used as a term indicating one network configured by connecting one or more APs 225 or 230 through the distribution system 210. The AP included in one ESS 240 may have the same service set identification (SSID).

A portal 220 may serve as a bridge which connects the wireless LAN network (IEEE 802.11) and another network (e.g., 802.X).

In the BSS illustrated in the upper part of FIG. 2, a network between the APs 225 and 230 and a network between the APs 225 and 230 and the STAs 200-1, 205-1, and 205-2 may be implemented. However, the network is configured even between the STAs without the APs 225 and 230 to perform communication. A network in which the communication is performed by configuring the network even between the STAs without the APs 225 and 230 is defined as an Ad-Hoc network or an independent basic service set (IBSS).

A lower part of FIG. 2 illustrates a conceptual view illustrating the IBSS.

Referring to the lower part of FIG. 2, the IBSS is a BSS that operates in an Ad-Hoc mode. Since the IBSS does not include the access point (AP), a centralized management entity that performs a management function at the center does not exist. That is, in the IBSS, STAs 250-1, 250-2, 250-3, 255-4, and 255-5 are managed by a distributed manner. In the IBSS, all STAs 250-1, 250-2, 250-3, 255-4, and 255-5 may be constituted by movable STAs and are not permitted to access the DS to constitute a self-contained network.

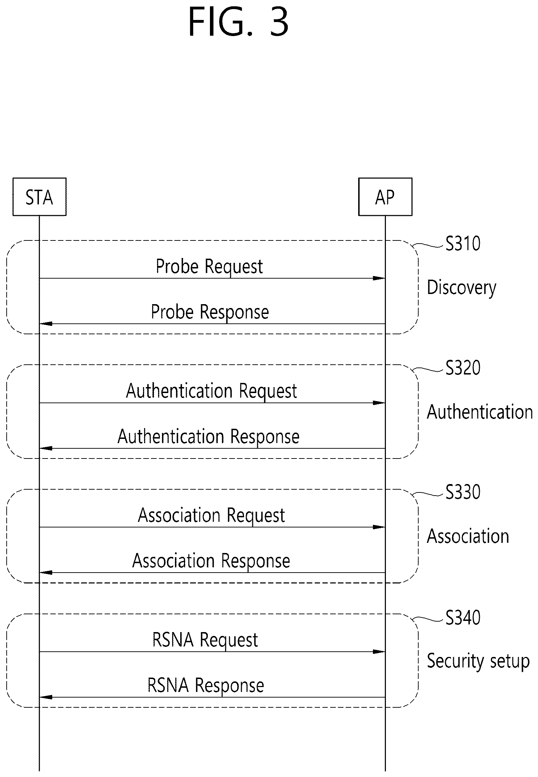

FIG. 3 illustrates a general link setup process.

In S310, a STA may perform a network discovery operation. The network discovery operation may include a scanning operation of the STA. That is, to access a network, the STA needs to discover a participating network. The STA needs to identify a compatible network before participating in a wireless network, and a process of identifying a network present in a particular area is referred to as scanning. Scanning methods include active scanning and passive scanning.

FIG. 3 illustrates a network discovery operation including an active scanning process. In active scanning, a STA performing scanning transmits a probe request frame and waits for a response to the probe request frame in order to identify which AP is present around while moving to channels. A responder transmits a probe response frame as a response to the probe request frame to the STA having transmitted the probe request frame. Here, the responder may be a STA that transmits the last beacon frame in a BSS of a channel being scanned. In the BSS, since an AP transmits a beacon frame, the AP is the responder. In an IBSS, since STAs in the IBSS transmit a beacon frame in turns, the responder is not fixed. For example, when the STA transmits a probe request frame via channel 1 and receives a probe response frame via channel 1, the STA may store BSS-related information included in the received probe response frame, may move to the next channel (e.g., channel 2), and may perform scanning (e.g., transmits a probe request and receives a probe response via channel 2) by the same method.

Although not shown in FIG. 3, scanning may be performed by a passive scanning method. In passive scanning, a STA performing scanning may wait for a beacon frame while moving to channels. A beacon frame is one of management frames in IEEE 802.11 and is periodically transmitted to indicate the presence of a wireless network and to enable the STA performing scanning to find the wireless network and to participate in the wireless network. In a BSS, an AP serves to periodically transmit a beacon frame. In an IBSS, STAs in the IBSS transmit a beacon frame in turns. Upon receiving the beacon frame, the STA performing scanning stores information about a BSS included in the beacon frame and records beacon frame information in each channel while moving to another channel. The STA having received the beacon frame may store BSS-related information included in the received beacon frame, may move to the next channel, and may perform scanning in the next channel by the same method.

After discovering the network, the STA may perform an authentication process in S320. The authentication process may be referred to as a first authentication process to be clearly distinguished from the following security setup operation in S340. The authentication process in S320 may include a process in which the STA transmits an authentication request frame to the AP and the AP transmits an authentication response frame to the STA in response. The authentication frames used for an authentication request/response are management frames.

The authentication frames may include information about an authentication algorithm number, an authentication transaction sequence number, a status code, a challenge text, a robust security network (RSN), and a finite cyclic group.

The STA may transmit the authentication request frame to the AP. The AP may determine whether to allow the authentication of the STA based on the information included in the received authentication request frame. The AP may provide the authentication processing result to the STA via the authentication response frame.

When the STA is successfully authenticated, the STA may perform an association process in S330. The association process includes a process in which the STA transmits an association request frame to the AP and the AP transmits an association response frame to the STA in response. The association request frame may include, for example, information about various capabilities, a beacon listen interval, a service set identifier (SSID), a supported rate, a supported channel, RSN, a mobility domain, a supported operating class, a traffic indication map (TIM) broadcast request, and an interworking service capability. The association response frame may include, for example, information about various capabilities, a status code, an association ID (AID), a supported rate, an enhanced distributed channel access (EDCA) parameter set, a received channel power indicator (RCPI), a received signal-to-noise indicator (RSNI), a mobility domain, a timeout interval (association comeback time), an overlapping BSS scanning parameter, a TIM broadcast response, and a QoS map.

In S340, the STA may perform a security setup process. The security setup process in S340 may include a process of setting up a private key through four-way handshaking, for example, through an extensible authentication protocol over LAN (EAPOL) frame.

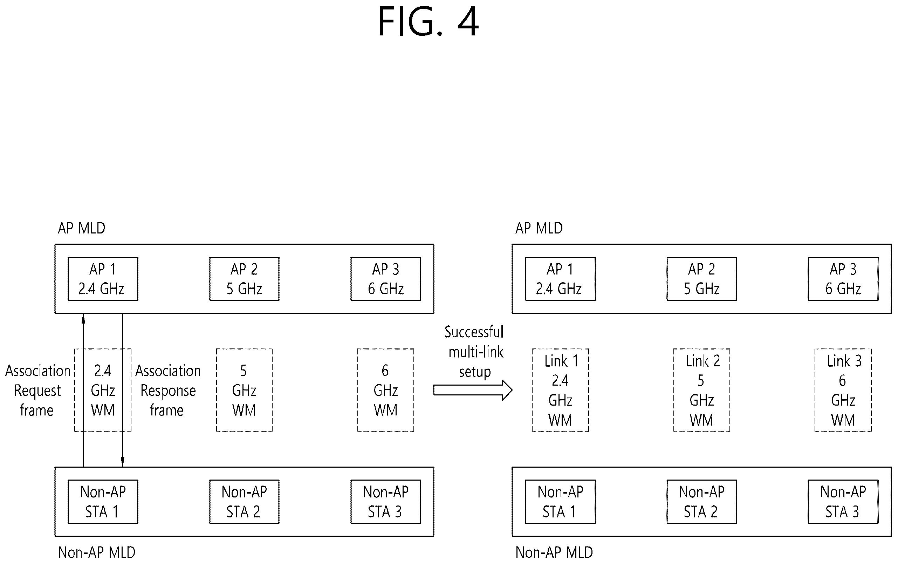

FIG. 4 shows an example of a multi-link (ML).

As illustrated in FIG. 4, multiple multi-link devices (MLDs) can perform communication via a remote link. The MLD can be classified into an AP MLD including multiple AP STAs and a non-AP MLD including multiple non-AP STAs. That is, the AP MLD can include affiliated APs (i.e., AP STAs), and the non-AP MLD can include affiliated STAs (i.e., non-AP STAs, or user-STAs).

The multi-link can include a first link and a second link, and different channels/subchannels/frequency resources can be allocated to the first and second links. The first and second multi-links can be identified through a link ID of 4 bits (or other n bits). The first and second links may be configured in the same 2.4 GHz, 5 GHz, or 6 GHz band. Alternatively, the first link and the second link may be configured in different bands.

The AP MLD of FIG. 4 includes three affiliated APs. In the example of FIG. 4, AP1 may operate in the 2.4 GHz band, AP2 may operate in the 5 GHz band, and AP3 may operate in the 6 GHz band. In the example of FIG. 4, the first link in which AP1 and non-AP1 operate may be defined as a channel/subchannel/frequency resource within the 2.4 GHz band. In addition, in the example of FIG. 4, the second link in which AP2 and non-AP2 operate may be defined as a channel/subchannel/frequency resource within the 5 GHz band. In addition, in the example of FIG. 4, the third link where AP3 and non-AP3 operate can be defined as a channel/subchannel/frequency resource within the 6 GHz band.

In the example of FIG. 4, AP1 can start a multi-link setup procedure (ML setup procedure) by transmitting an association request frame to non-AP STA1. In the example of FIG. 4, non-AP STA1 can transmit an association response frame in response to the association request frame. Each AP (e.g., AP1/2/3) illustrated in FIG. 4 may be identical to the AP illustrated in FIG. 1 and/or FIG. 2, and each non-AP (e.g., non-AP1/2/3) illustrated in FIG. 4 may be identical to the STA (i.e., user-STA or non-AP STA) illustrated in FIG. 1 and/or FIG. 2.

The specific features of the present disclosure are not limited to the specific features of FIG. 4. That is, the number of links can be defined in various ways, and multiple links can be defined in various ways within at least one band.

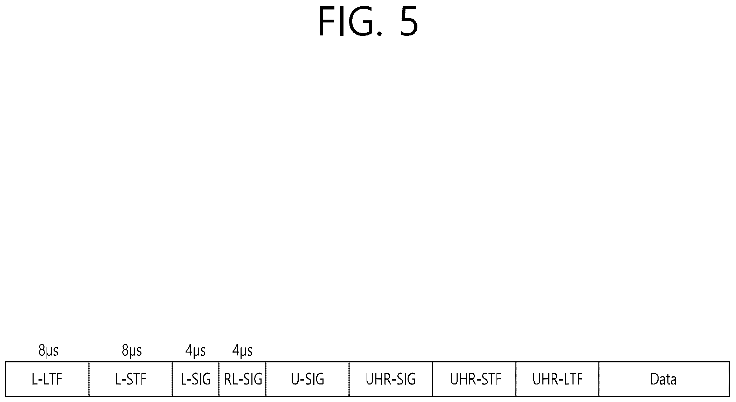

FIG. 5 shows an example of a physical protocol data unit or physical layer (PHY) protocol data unit (PPDU) transmitted/received by an STA of the present disclosure.

An STA (e.g., an AP STA, a non-AP STA, an AP MLD, a non-AP MLD) of the present disclosure can transmit and/or receive a PPDU of FIG. 5. The PPDU described in the present disclosure can have, for example, a structure of FIG. 5. In addition, the PPDU described in the present disclosure can be called by various names such as a transmission PPDU, a reception PPDU, a first type or an N^{th} type PPDU, etc. The PPDU described in the present disclosure can be used in a WLAN system defined according to IEEE 802.11bn and/or a next-generation WLAN system that improves IEEE 802.11bn.

The PPDU of FIG. 5 can be related to various PPDU types used in a UHR system. For example, the example of FIG. 5 can be used for at least one of single-user (SU) mode/type/transmission, multi-user (MU) mode/type/transmission, and null-data packet (NDP) mode/type/transmission related to channel sounding. For example, if the example of FIG. 5 is related to NDP, the data field illustrated can be omitted. If the PPDU of FIG. 5 is used for trigger-based (TB) mode, UHR-SIG of FIG. 5 can be omitted. In other words, an STA that has received a trigger frame for uplink-MU (UL-MU) communication can transmit a PPDU with UHR-SIG omitted in the example of FIG. 5.

In FIG. 5, L-STF or UHR-LTF may be called a preamble or a physical preamble, and may be generated/transmitted/received/acquired/decoded in the physical layer (included in the transmitting/receiving STA).

Each block illustrated in FIG. 5 may be called a field/subfield/signal, etc. The names of these fields/subfields/signals may be legacy short training field (L-STF), legacy long training field (L-LTF), legacy signal (L-SIG), repeated L-SIG (RL-SIG), universal signal (U-SIG), UHR-signal (UHR-SIG), etc., as illustrated in FIG. 5.

A subcarrier spacing of the L-STF, L-LTF, L-SIG, RL-SIG, U-SIG, and UHR-SIG fields of FIG. 5 may be determined as 312.5 kHz, and a subcarrier spacing of the UHR-STF, UHR-LTF, and Data fields may be determined as 78.125 kHz. That is, a tone index (or subcarrier index) of the L-STF, L-LTF, L-SIG, RL-SIG, U-SIG, and UHR -SIG fields may be expressed in unit of 312.5 kHz, and a tone index (or subcarrier index) of the UHR-STF, UHR-LTF, and Data fields may be expressed in unit of 78.125 kHz.

In the PPDU of FIG. 5, the L-LTF and the L-STF may be the same as those in the conventional fields (for example, non-HT LTF and non-HT STF defined in conventional WLAN standards).

The L-SIG field of FIG. 5 may include, for example, bit information of 24 bits. For example, the 24-bit information may include a rate field of 4 bits, a reserved bit of 1 bit, a length field of 12 bits, a parity bit of 1 bit, and a tail bit of 6 bits. For example, the length field of 12 bits may include information related to a length or time duration of a PPDU. For example, the length field of 12 bits may be determined based on a type of the PPDU. For example, when the PPDU is a non-high throughput (HT), high throughput (HT), very high throughput (VHT) PPDU, extremely high throughput (EHT) PPDU or UHR PPDU, a value of the length field may be determined as a multiple of 3. For example, when the PPDU is an HE PPDU, the value of the length field may be determined as "a multiple of 3"+1 or "a multiple of 3"+2. In other words, for the non-HT, HT, VHT PPDI, EHT PPDU or the UHR PPDU, the value of the length field may be determined as a multiple of 3, and for the high efficiency (HE) PPDU, the value of the length field may be determined as "a multiple of 3"+1 or "a multiple of 3"+2. In other words, the LENGTH field in an UHR PPDU is set to a value satisfying the condition that the remainder is zero when LENGTH is divided by 3

For example, the (non-AP and AP) STA may apply BCC encoding based on a 1/2 coding rate to the 24-bit information of the L-SIG field. Thereafter, the transmitting STA may obtain a BCC coding bit of 48 bits. BPSK modulation may be applied to the 48-bit coding bit, thereby generating 48 BPSK symbols. The transmitting STA may map the 48 BPSK symbols to positions except for a pilot subcarrier{subcarrier index -21, -7, +7, +21} and a DC subcarrier{subcarrier index 0}. As a result, the 48 BPSK symbols may be mapped to subcarrier indices -26 to -22, -20 to -8, -6 to -1, +1 to +6, +8 to +20, and +22 to +26. The transmitting STA may additionally map a signal of {-1, -1, -1, 1} to a subcarrier index{-28, -27, +27, +28}. The aforementioned signal may be used for channel estimation in the frequency domain corresponding to {-28, -27, +27, +28}.

For example, the (non-AP and AP) STA may generate an RL-SIG generated in the same manner as the L-SIG. BPSK modulation may be applied to the RL-SIG. The (non-AP and AP) STA may know that the RX PPDU is the HE PPDU, EHT PPDU, or the UHR PPDU, based on the presence of the RL-SIG. In other words, a receiving (non-AP and AP) STA can know that a received PPDU is one of a HE PPDU, an EHT PPDU, and a UHR PPDU if RL-SIG is present. In other words, a receiving (non-AP and AP) STA can know that a received PPDU is one of a non-HT PPDU, an HT PPDU, and a VHT PPDU if RL-SIG is not present. In other words, the RL-SIG field is a repeat of the L-SIG field and is used to differentiate a UHR PPDU from a non-HT PPDU, HT PPDU, and VHT PPDU.

A universal SIG (U-SIG) may be inserted after the RL-SIG of FIG. 5. The U-SIG may be called in various terms such as a first SIG field, a first SIG, a first type SIG, a control signal, a control signal field, a first (type) control signal, common control field, common control signal, or the like.

The U-SIG may include information of N bits, and may include information for identifying a type of the EHT PPDU. For example, the U-SIG may be configured based on two symbols (e.g., two contiguous OFDM symbols). Each symbol (e.g., OFDM symbol) for the U-SIG may have a duration of 4us. Each symbol of the U-SIG may be used to transmit the 26-bit information. For example, each symbol of the U-SIG may be transmitted/received based on 52 data tomes and 4 pilot tones.

Through the U-SIG for example, A-bit information (e.g., 52 un-coded bits) may be transmitted. A first symbol of the U-SIG may transmit first X-bit information (e.g., 26 un-coded bits) of the A-bit information, and a second symbol of the U-SIG may transmit the remaining Y-bit information (e.g. 26 un-coded bits) of the A-bit information. For example, the transmitting STA may obtain 26 un-coded bits included in each U-SIG symbol. The transmitting STA may perform convolutional encoding (i.e., BCC encoding) based on a rate of R=1/2 to generate 52-coded bits, and may perform interleaving on the 52-coded bits. The transmitting STA may perform BPSK modulation on the interleaved 52-coded bits to generate 52 BPSK symbols to be allocated to each U-SIG symbol. One U-SIG symbol may be transmitted based on 65 tones (subcarriers) from a subcarrier index -28 to a subcarrier index +28, except for a DC index 0. The 52 BPSK symbols generated by the transmitting STA may be transmitted based on the remaining tones (subcarriers) except for pilot tones, i.e., tones -21, -7, +7, +21.

For example, the A-bit information (e.g., 52 un-coded bits) generated by the U-SIG may include a CRC field (e.g., a field having a length of 4 bits) and a tail field (e.g., a field having a length of 6 bits). The CRC field and the tail field may be transmitted through the second symbol of the U-SIG. The CRC field may be generated based on 26 bits allocated to the first symbol of the U-SIG and the remaining 16 bits except for the CRC/tail fields in the second symbol, and may be generated based on the conventional CRC calculation algorithm. In addition, the tail field may be used to terminate trellis of a convolutional decoder, and may be set to, for example, '000000'.

The A-bit information (e.g., 52 un-coded bits) transmitted by the U-SIG (or U-SIG field) may be divided into version-independent bits and version-dependent bits. For example, the version-independent bits may have a fixed or variable size. For example, the version-independent bits may be allocated only to the first symbol of the U-SIG, or the version-independent bits may be allocated to both of the first and second symbols of the U-SIG. For example, the version-independent bits and the version-dependent bits may be called in various terms such as a first control bit, a second control bit, or the like.

For example, the version-independent bits of the U-SIG may include a PHY version identifier of 3 bits. For example, the PHY version identifier of 3 bits may include information related to a PHY version of a TX/RX PPDU. For example, a first value of the PHY version identifier of 3 bits (for example, 000 value) may indicate that the TX/RX PPDU is an EHT PPDU. Also, a second value of the PHY version identifier of 3 bits (for example, 001 value) may indicate that the TX/RX PPDU is a UHR PPDU.

In other words, when the (AP/non-AP) STA transmits an EHT PPDU, the 3-bit PHY version identifier can be set to the first value, and when the (AP/non-AP) STA transmits a UHR PPDU, the 3-bit PHY version identifier can be set to the second value. In other words, the receiving (AP/non-AP) STA can determine that the received PPDU is an EHT PPDU based on the PHY version identifier having the first value, and can determine that the received PPDU is a UHR PPDU based on the PHY version identifier having the second value.

For example, the version-independent bits of the U-SIG may include a UL/DL flag field of 1 bit. A first value of the UL/DL flag field of 1 bit relates to UL communication, and a second value of the UL/DL flag field relates to DL communication.

For example, the version-independent bits of the U-SIG may include information related to a transmission opportunity (TXOP) length and information related to a BSS color ID.

For example, if a UHR PPDU is classified into various types (e.g., type related to SU transmission (performed based on UL or DL), type related to DL transmission, type related to NDP transmission, type related to DL non-MU-MIMO, type related to DL MU-MIMO, type related to multi-AP operation, type related to coordinated beamforming (Co-BF), spatial reuse (SR), type related to coordinated OFDMA (C-OFDMA), type related to coordinated TDMA (Co-TDMA)), information about the type of the UHR PPDU (e.g., 2-bit or 3-bit information) can be included in the version-dependent bits of the U-SIG.

For example, the U-SIG may include: 1) a bandwidth field including information related to a bandwidth; 2) a field including information related to an modulation and coding scheme (MCS) applied to UHR-SIG; 3) an indication field including information regarding whether a dual subcarrier modulation (DCM) scheme is applied to UHR-SIG; 4) a field including information related to the number of symbol used for UHR-SIG; 5) a field including information regarding whether the UHR-SIG is generated across a full band; 6) a field including information related to a type of UHR-LTF/STF; and 7) information related to a field indicating an UHR-LTF length and a CP length.

Preamble puncturing may be applied to the PPDU of FIG. 5. The preamble puncturing implies that puncturing is applied to part (e.g., a secondary 20 MHz band) of the full band. For example, when an 80 MHz PPDU is transmitted, an STA may apply puncturing to the secondary 20 MHz band out of the 80 MHz band, and may transmit a PPDU only through a primary 20 MHz band and a secondary 40 MHz band.

For example, a pattern of the preamble puncturing may be configured in advance. For example, when a first puncturing pattern is applied, puncturing may be applied only to the secondary 20 MHz band within the 80 MHz band. For example, when a second puncturing pattern is applied, puncturing may be applied to only any one of two secondary 20 MHz bands included in the secondary 40 MHz band within the 80 MHz band. For example, when a third puncturing pattern is applied, puncturing may be applied to only the secondary 20 MHz band included in the primary 80 MHz band within the 160 MHz band (or 80+80 MHz band). For example, when a fourth puncturing is applied, puncturing may be applied to at least one 20 MHz channel not belonging to a primary 40 MHz band in the presence of the primary 40 MHz band included in the 80MHaz band within the 160 MHz band (or 80+80 MHz band).

Information related to the preamble puncturing applied to the PPDU may be included in U-SIG and/or UHR-SIG. For example, a first field of the U-SIG may include information related to a contiguous bandwidth, and second field of the U-SIG may include information related to the preamble puncturing applied to the PPDU.

For example, the U-SIG and the UHR-SIG may include the information related to the preamble puncturing, based on the following method. When a bandwidth of the PPDU exceeds 80 MHz, the U-SIG may be configured individually in unit of 80 MHz. For example, when the bandwidth of the PPDU is 160 MHz, the PPDU may include a first U-SIG for a first 80 MHz band and a second U-SIG for a second 80 MHz band. In this case, a first field of the first U-SIG may include information related to a 160 MHz bandwidth, and a second field of the first U-SIG may include information related to a preamble puncturing (i.e., information related to a preamble puncturing pattern) applied to the first 80 MHz band. In addition, a first field of the second U-SIG may include information related to a 160 MHz bandwidth, and a second field of the second U-SIG may include information related to a preamble puncturing (i.e., information related to a preamble puncturing pattern) applied to the second 80 MHz band. Meanwhile, an UHR-SIG contiguous to the first U-SIG may include information related to a preamble puncturing applied to the second 80 MHz band (i.e., information related to a preamble puncturing pattern), and an UHR-SIG contiguous to the second U-SIG may include information related to a preamble puncturing (i.e., information related to a preamble puncturing pattern) applied to the first 80 MHz band.

Additionally or alternatively, the U-SIG and the UHR-SIG may include the information related to the preamble puncturing, based on the following method. The U-SIG may include information related to a preamble puncturing (i.e., information related to a preamble puncturing pattern) for all bands. That is, the UHR-SIG may not include the information related to the preamble puncturing, and only the U-SIG may include the information related to the preamble puncturing (i.e., the information related to the preamble puncturing pattern).

The U-SIG may be configured in unit of 20 MHz. For example, when an 80 MHz PPDU is configured, the U-SIG may be duplicated. That is, four identical U-SIGs may be included in the 80 MHz PPDU. PPDUs exceeding an 80 MHz bandwidth may include different U-SIGs.

The UHR-SIG of FIG. 5 may include control information for the receiving STA. The UHR-SIG may be transmitted through at least one symbol, and one symbol may have a length of 4us. Information related to the number of symbols used for the UHR-SIG may be included in the U-SIG.

UHR-SIG provides an additional signal to the U-SIG field to enable STA to interpret/decode UHR PPDU. UHR-SIG field may include U-SIG overflow bits that are commonly applied to all users. In addition, UHR-SIG field includes resource allocation information, so that STA can look-up resources used in fields including data field/UHR-STF/UHR-LTF (i.e., UHR modulated fields of a UHR PPDU).

Frequency resources of UHR-LTF, UHR-STF, and data fields illustrated in FIG. 5 may be determined based on RUs (resource units) defined by multiple subcarriers/tones. That is, UHR-LTF, UHR-STF, and data fields of the present disclosure may be transmitted/received through RUs (resource units) defined by multiple subcarriers/tones.

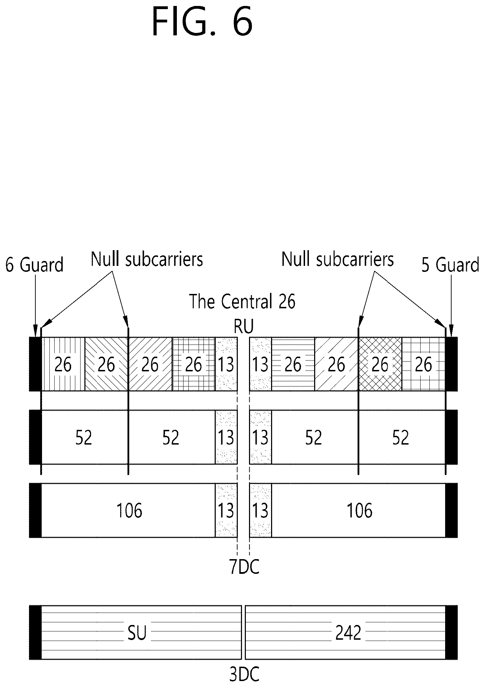

FIG. 6 illustrates the layout of resource units (RUs) used for a 20 MHz PPDU. That is, the UHR-LTF, UHR-STF, and/or data fields included in the 20 MHz PPDU can be transmitted/received through at least one of the various RUs defined in FIG. 6.

As illustrated in the uppermost part of FIG. 6, a 26-unit (i.e., a unit corresponding to 26 tones) may be disposed. Six tones may be used for a guard band in the leftmost band of the 20 MHz band, and five tones may be used for a guard band in the rightmost band of the 20 MHz band. Further, seven DC tones may be inserted in a center band, that is, a DC band, and a 26-unit corresponding to 13 tones on each of the left and right sides of the DC band may be disposed. A 26-unit, a 52-unit, and a 106-unit may be allocated to other bands. Each unit may be allocated for a receiving STA, that is, a user.

The layout of the RUs in FIG. 6 may be used not only for a multiple users (MUs) but also for a single user (SU), in which case one 242-unit may be used and three DC tones may be inserted as illustrated in the lowermost part of FIG. 6.

Although FIG. 6 proposes RUs having various sizes, that is, a 26-RU, a 52-RU, a 106-RU, and a 242-RU, specific sizes of RUs may be extended or increased. Therefore, the present embodiment is not limited to the specific size of each RU (i.e., the number of corresponding tones). In the present disclosure, N-RU may be represented as N-tone RU, etc. For example, 26-RU may be represented as 26-tone RU.

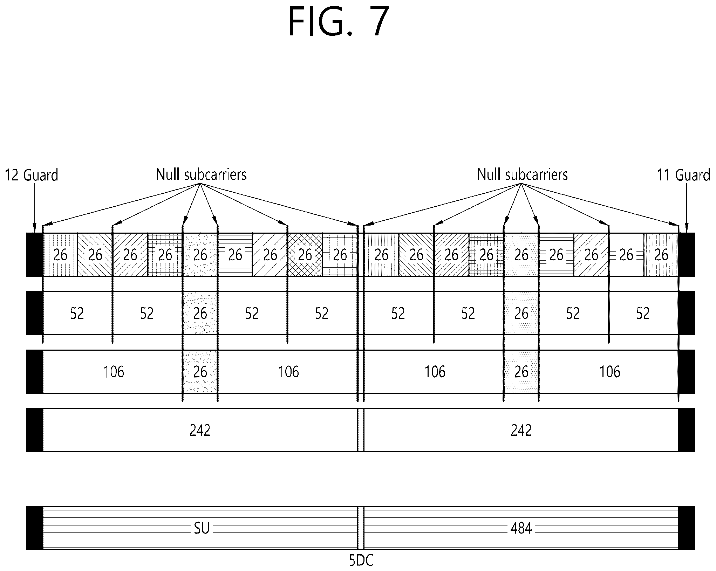

FIG. 7 illustrates the layout of resource units (RUs) used for 40MHz PPDU.

Similarly to FIG. 6 in which RUs having various sizes are used, a 26-RU, a 52-RU, a 106-RU, a 242-RU, a 484-RU, and the like may be used in an example of FIG. 7. Further, five DC tones may be inserted in a center frequency, 12 tones may be used for a guard band in the leftmost band of the 40 MHz band, and 11 tones may be used for a guard band in the rightmost band of the 40 MHz band.

As illustrated in FIG. 7, when the layout of the RUs is used for a single user, a 484-RU may be used. The specific number of RUs may be changed similarly to FIG. 6.

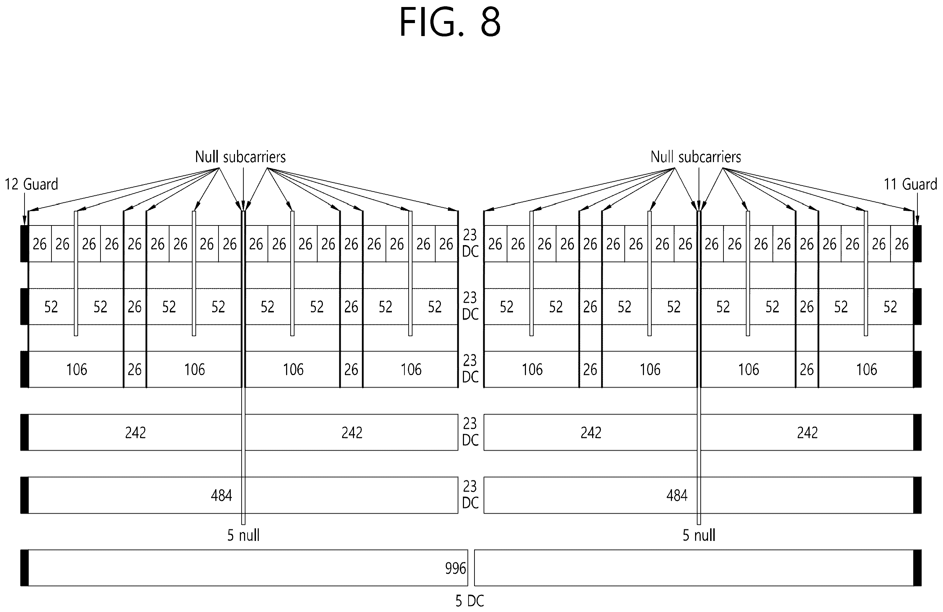

FIG. 8 illustrates the layout of resource units (RUs) used for an 80MHz PPDU. The layout of the resource units (RUs) used in the present disclosure may vary. For example, the layout of the resource units (RUs) used in the 80MHz band may vary.

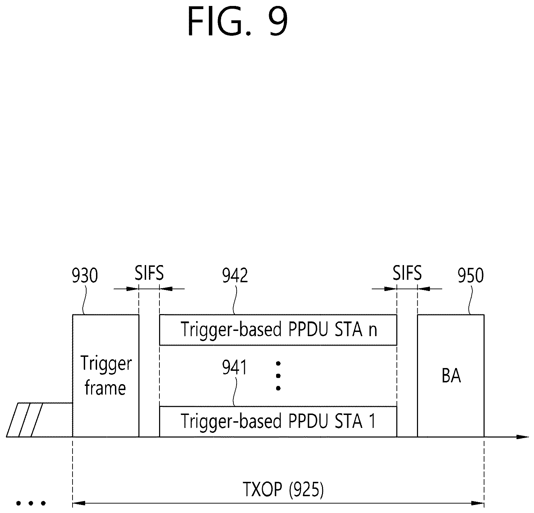

FIG. 9 shows an operation related to UL-MU. As shown, a transmitting STA (e.g., AP) can obtain TXOP 925 by performing channel access through contending (i.e., backoff operation) and transmit trigger frame 930. That is, the transmitting STA (e.g., AP) can transmit PPDU including trigger frame 930. When PPDU including trigger frame is received, trigger-based (TB) PPDU is transmitted after delay of SIFS.

TB PPDU 941, 942 can be transmitted at the same time and transmitted from multiple STA (e.g., user STA) whose AID is indicated in trigger frame 930. ACK frame 950 for TB PPDU can be implemented in various forms. For example, ACK frame 950 for TB PPDU can be implemented in the form of block ACK (BA).

In FIG. 9, transmission(s) of trigger Frame 930, TB PPDU 941, 942 and/or ACK Frame 950 can be performed within TXOP 925.

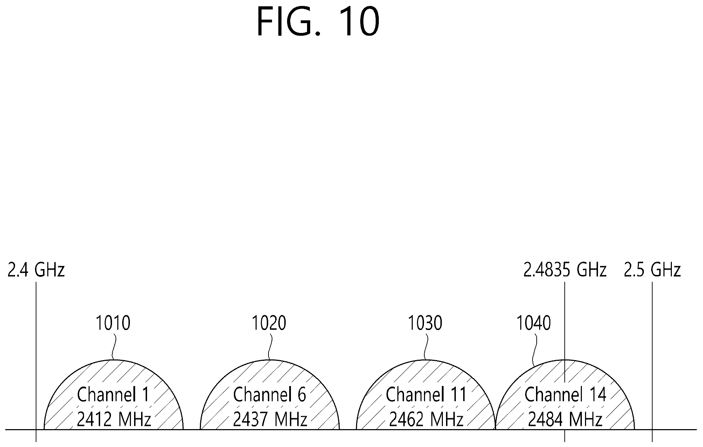

FIG. 10 illustrates an example of channels used/supported/defined within the 2.4 GHz band.

The 2.4 GHz band may also be referred to by other names, such as "first band." Furthermore, the 2.4 GHz band may refer to a frequency range in which channels with a center frequency adjacent to 2.4 GHz (e.g., channels with a center frequency between 2.4 and 2.5 GHz) are used/supported/defined.

The 2.4 GHz band may include multiple 20 MHz channels. Each 20 MHz within the 2.4 GHz band may have multiple channel indices (e.g., indices 1 through 14). For example, the center frequency of a 20 MHz channel assigned with channel index 1 may be 2.412 GHz, the center frequency of a 20 MHz channel assigned with channel index 2 may be 2.417 GHz, and the center frequency of a 20 MHz channel assigned with channel index N may be (2.407 + 0.005*N) GHz. Channel indices may be referred to by various names, such as channel numbers. The specific numerical values of the channel indices and center frequencies may vary.

FIG. 10 illustrates examples of four channels within the 2.4 GHz band. The illustrated first frequency region 1010 to fourth frequency regions 1040 may each include one channel. For example, the first frequency region 1010 may include channel 1 (a 20 MHz channel with index 1). In this case, the center frequency of channel 1 may be set to 2412 MHz. The second frequency range 1020 may include channel 6. The center frequency of channel 6 may be set to 2437 MHz. The third frequency range 1030 may include channel 11. The center frequency of channel 11 may be set to 2462 MHz. The fourth frequency range 1040 may include channel 14. The center frequency of channel 14 may be set to 2484 MHz.

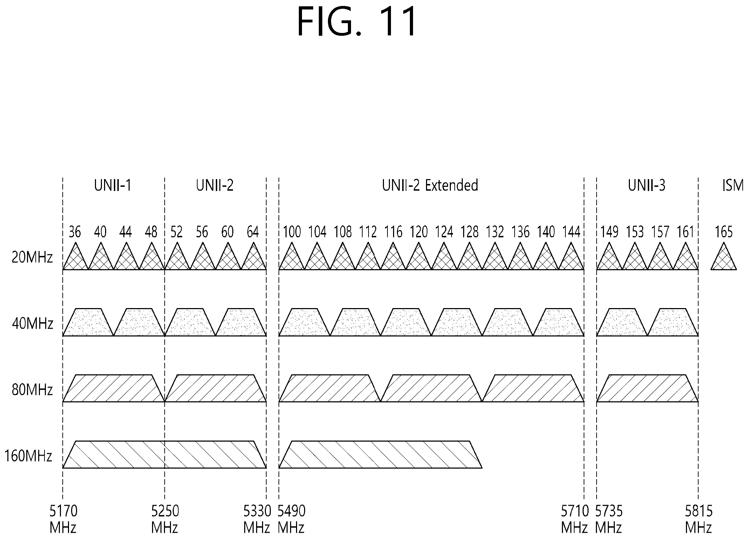

FIG. 11 illustrates an example of channels used/supported/defined within the 5 GHz band.

The 5 GHz band may be referred to by other names, such as "second band" or "band." The 5 GHz band may refer to a frequency range in which channels with a center frequency of 5 GHz or more but less than 6 GHz (or less than 5.9 GHz) are used/supported/defined. Alternatively, the 5 GHz band may include multiple channels between 4.5 GHz and 5.5 GHz. The specific numerical values shown in FIG. 11 may vary.

The multiple channels within the 5 GHz band include Unlicensed National Information Infrastructure (UNII)-1, UNII-2, UNII-3, and ISM. UNII-1 may be referred to as UNII Low. UNII-2 may include frequency ranges called UNII Mid and UNII-2Extended. UNII-3 may be referred to as UNII-Upper.

Multiple channels may be configured within the 5 GHz band, and the bandwidth of each channel may vary, such as 20 MHz, 40 MHz, 80 MHz, or 160 MHz. For example, the 5170 MHz to 5330 MHz frequency range within UNII-1 and UNII-2 may be divided into eight 20 MHz channels. The 5170 MHz to 5330 MHz frequency range can be divided into four channels across a 40 MHz frequency band. The 5170 MHz to 5330 MHz frequency range can be divided into two channels across an 80 MHz frequency band. Alternatively, the 5170 MHz to 5330 MHz frequency range can be divided into one channel across a 160 MHz frequency band.

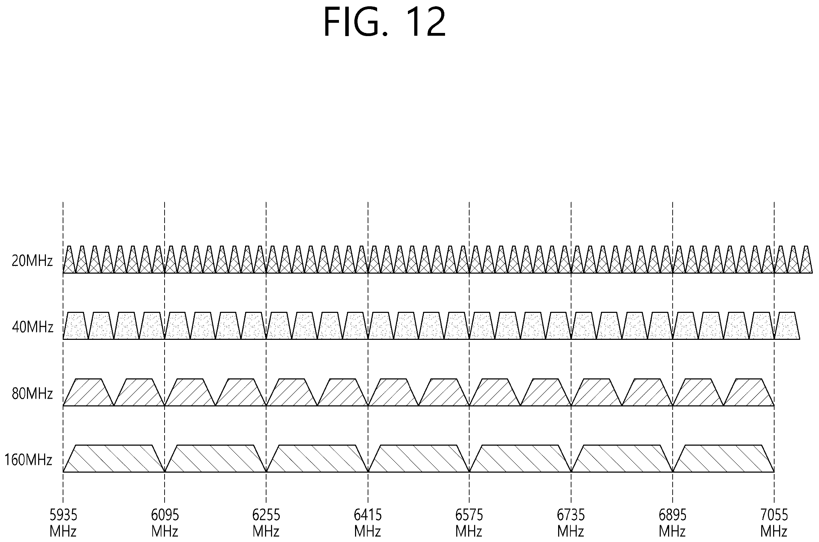

FIG. 12 illustrates an example of channels used, supported, and defined within the 6 GHz band.

The 6 GHz band may also be referred to by other names, such as the third band. The 6 GHz band may refer to a frequency range in which channels with center frequencies above 5.9 GHz are used, supported, and defined. The specific numbers shown in FIG. 12 may vary.

For example, the 20 MHz channel in FIG. 12 may be defined starting from 5.940 GHz. Specifically, the leftmost channel among the 20 MHz channels in FIG. 12 may have an index of 1 (or channel index, channel number, etc.), and a center frequency of 5.945 GHz may be assigned. That is, the center frequency of the index N channel may be determined as (5.940 + 0.005*N) GHz.

Accordingly, the indexes (or channel numbers) of the 20 MHz channels of FIG. 12 are 1, 5, 9, 13, 17, 21, 25, 29, 33, 37, 41, 45, 49, 53, 57, 61, 65, 69, 73, 77, 81, 85, 89, 93, 97, 101, 105, 109, 113, 117, 121, 125, 129, 133, 137, 141, 145, 149, 153, 157, 161, 165, 169, 173, 177, 181, 185, 189, 193, It can be 197, 201, 205, 209, 213, 217, 221, 225, 229, 233. Also, according to the (5.940 + 0.005*N) GHz rule mentioned above, the indices of the 40 MHz channels in FIG. 12 can be 3, 11, 19, 27, 35, 43, 51, 59, 67, 75, 83, 91, 99, 107, 115, 123, 131, 139, 147, 155, 163, 171, 179, 187, 195, 203, 211, 219, 227.

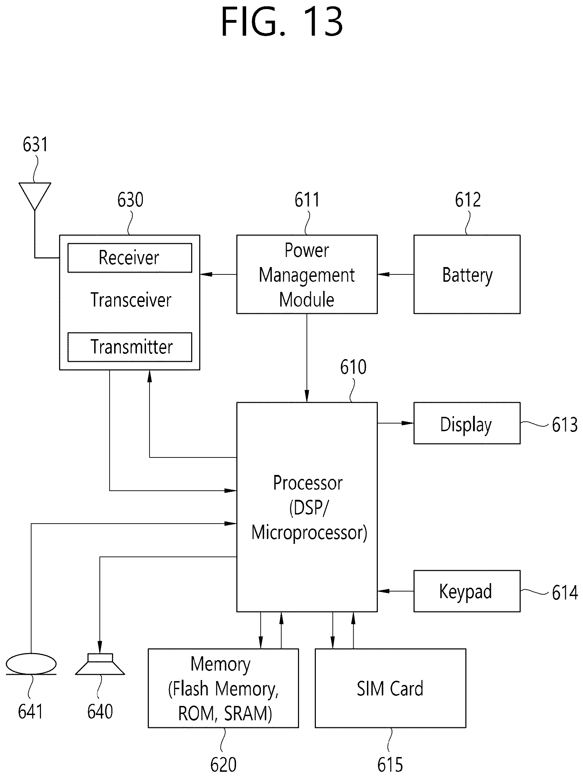

FIG. 13 shows a modified example of a transmitting device and/or a receiving device of the present disclosure.

The devices (e.g., AP STA, non-AP STA) shown in FIGS. 1 to 4 can be modified as shown in FIG. 13. The transceiver 630 of FIG. 13 can be identical to the transceiver 113, 123 of FIG. 1. The transceiver 630 of FIG. 13 can include a receiver and a transmitter.

The processor 610 of FIG. 13 can be identical to the processor 111, 121 of FIG. 1. Alternatively, the processor 610 of FIG. 13 can be identical to the processing chip 114, 124 of FIG. 1.

The memory 160 of FIG. 13 may be the same as the memory 112, 122 of FIG. 1. Alternatively, the memory 160 of FIG. 13 may be a separate external memory different from the memory 112, 122 of FIG. 1.

Referring to FIG. 13, the power management module 611 manages power for the processor 610 and/or the transceiver 630. The battery 612 supplies power to the power management module 611. The display 613 outputs the result processed by the processor 610. The keypad 614 receives input to be used by the processor 610. The keypad 614 may be displayed on the display 613. The SIM card 616 may be an integrated circuit used to securely store an international mobile subscriber identity (IMSI) and its associated keys, which are used to identify and authenticate subscribers in mobile devices such as mobile phones and computers.

Referring to FIG. 13, the speaker 640 may output sound-related results processed by the processor 610. The microphone 641 may receive sound-related input to be used by the processor 610.

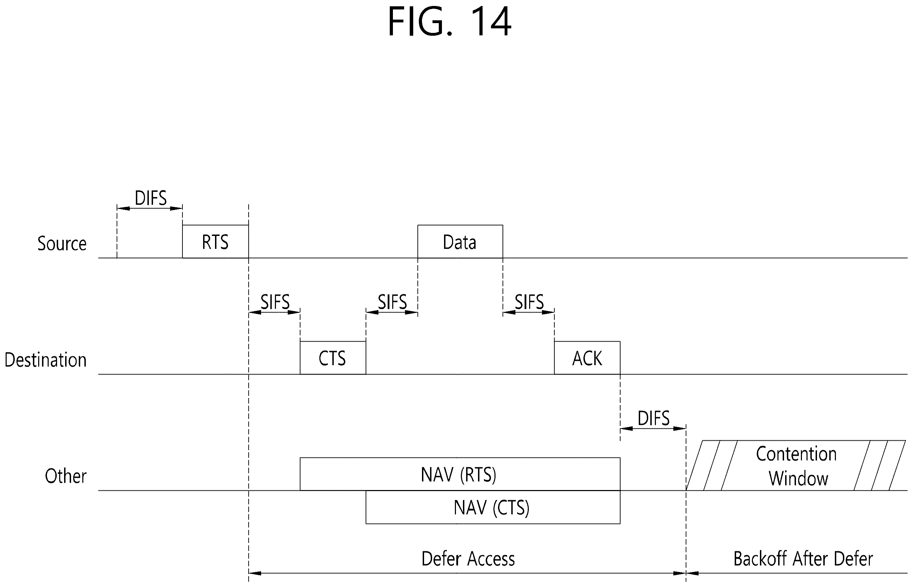

FIG. 14 shows an example of a procedure related to RTS/CTS transmission.

Referring to FIG. 14, when a Source (e.g., an AP STA/non-AP STA) intending to transmit data transmits a request-to-send (RTS) frame to a Destination (e.g., an AP STA/non-AP STA) receiving the data, the Destination can transmit a clear-to-send (CTS) frame to neighboring stations to notify them that it will receive the data. In other words, the Destination designated as the receiver through the RTS frame can transmit a CTS frame. If the Source that transmitted the RTS frame receives the CTS frame, the Source can initiate data transmission to the Destination.

Meanwhile, if a STA other than the Destination designated as the receiver through the RTS frame receives the RTS frame, or if a STA other than the Source that transmitted the RTS frame receives the CTS frame, the STA can configure a network allocation vector (NAV). A STA that has set a NAV may not transmit data during the NAV period, which allows the STA to avoid collisions between the STA and the Source/Destination. On the other hand, if the Destination designated as the receiver through the RTS frame receives the RTS frame, or if the Source that transmitted the RTS frame receives a CTS frame, the Source/Destination does not set a NAV.

If a CTS frame (e.g., PHY-RXSTART.indication primitive) is not received within a certain period from the time the RTS frame is received (e.g., the time when the MAC receives the PHY-RXEND.indication primitive corresponding to the RTS frame), STAs that have set or updated a NAV through the RTS frame may reset the NAV (e.g., to 0). The certain period may be (2*aSIFSTime + CTS_Time + aRxPHYStartDelay + 2*aSlotTime). The CTS_Time can be calculated based on the length and data rate of the CTS frame indicated by the RTS frame.

For convenience of description, FIG. 14 shows setting or updating the NAV through the RTS frame or the CTS frame. However, NAV setting/resetting/updating can also be performed based on the duration field of various other frames, such as non-HT PPDU, HT PPDU, VHT PPDU, or HE PPDU (e.g., the duration field in the MAC header of a MAC frame). For example, if the RA field in a received MAC frame does not match its own address (e.g., MAC address), the STA can set/reset/update the NAV.

Meanwhile, according to the EHT (i.e., 802.11be) standard, an AP can allocate a portion of the time duration within the TXOP obtained by the AP to support peer-to-peer (P2P) transmission to a non-AP STA. To allocate a portion of the time duration within a TXOP, a TXOP Sharing Mode subfield may be defined within the Common Info Field of the MU-RTS Trigger frame. When the value of the TXOP Sharing Mode subfield is non-zero, such a MU-RTS trigger frame may be referred to as a MU-RTS TXOP Sharing (TXS) Trigger frame (TF).

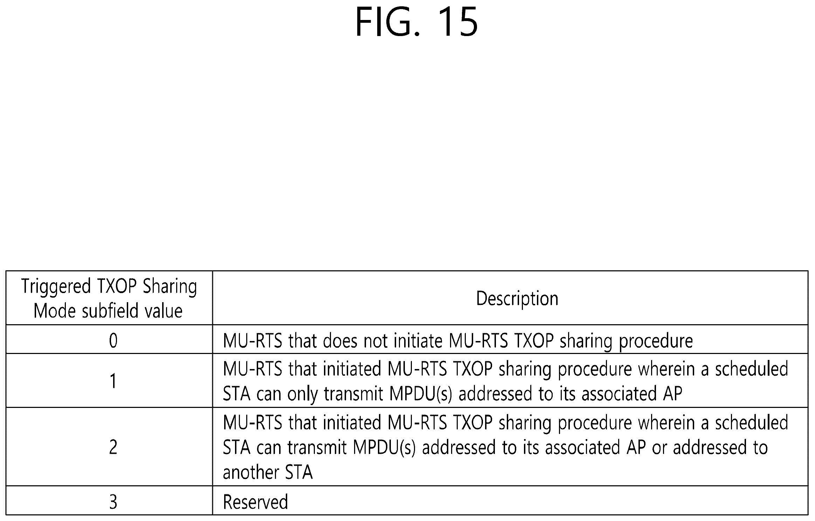

FIG. 15 shows an example of the value of the TXOP Sharing Mode subfield.

Referring to FIG. 15, when the value of the TXOP Sharing Mode subfield is 1, one or more (non-TB) PPDU transmissions to the AP may be supported. When the value of the TXOP Sharing Mode subfield is 2, peer-to-peer transmissions may also be supported in addition to (non-TB) PPDU transmissions to the AP.

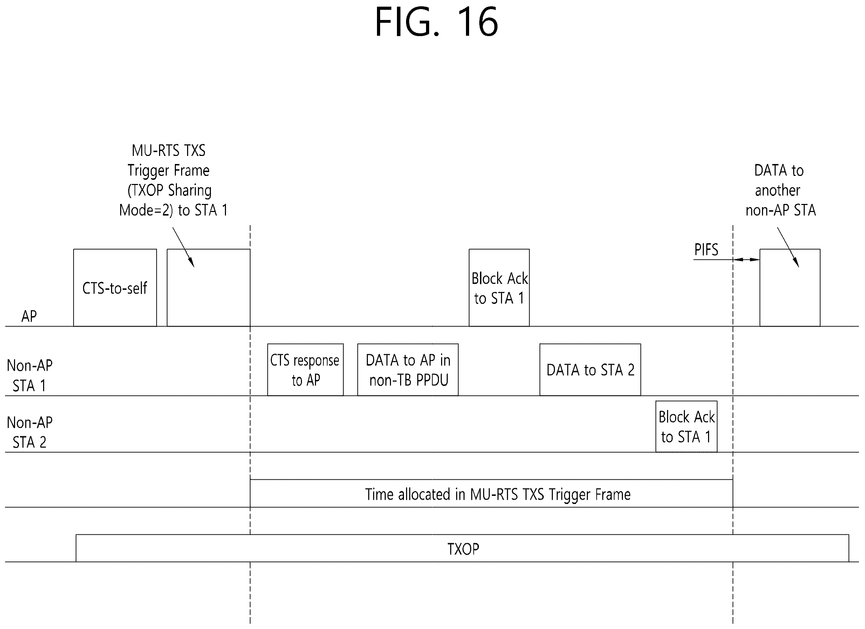

FIG. 16 shows an example of operation when the TXOP Shared Mode subfield has a value of 2.

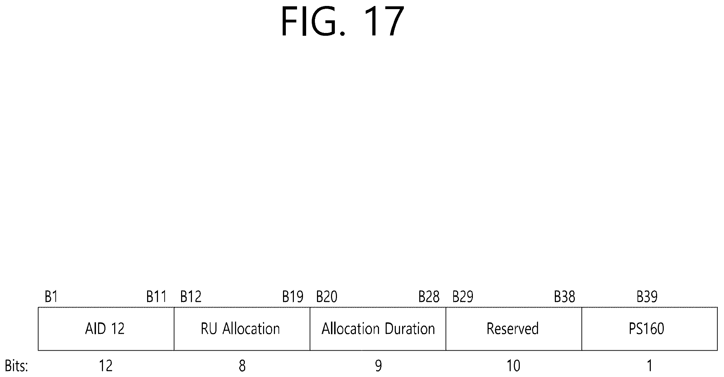

Referring to FIG. 16, an AP may transmit a MU-RTS TXS TF comprising allocation (time) duration information (e.g., Time allocated in MU-RTS TXS Trigger Frame) to non-AP STA 1. Non-AP STA 1 may transmit a CTS in response to the MU-RTS TXS TF and perform P2P transmission to non-AP STA 2. At this time, the (time) duration allocated from the AP to non-AP STA 1 may be indicated in units of 16 µ*s* by the Allocation Duration subfield of FIG. 17.

FIG. 17 shows an example of the User Info Field format of the MU-RTS TXS TF.

Referring to FIG. 17, the allocation duration subfield can include 9 bits from B20 to B28 in the MU-RTS TXS TF and can indicate an allocation duration in units of 16 µ*s*. In this case, the maximum length of the allocation duration that can be indicated by the allocation duration subfield can be 16×2⁹ = 8192 µ*s*.

Meanwhile, the EHT AP can allocate one TXOP time (or one allocation duration within the TXOP duration) to one STA using one User Info field as illustrated in FIG. 17. However, multi-user triggered TXOP sharing protocol/procedure, in which multiple STAs can perform P2P transmission during the TXOP duration provided by the AP (e.g., through modification of the existing protocol), can be implemented.

The multi-user triggered TXOP sharing protocol/procedure can be designed simply from the MU perspective. In the multi-user triggered TXOP sharing protocol/procedure, situations A and B below may occur:

A. Some STAs triggered by the MU-RTS TXS TF may not transmit a CTS response depending on channel conditions. This may result in a CTS failure for some STAs.

B. If a STA completes all P2P transmissions and returns a TXOP to the AP before its allocation duration expires, the channel may be wasted during the remaining time duration.

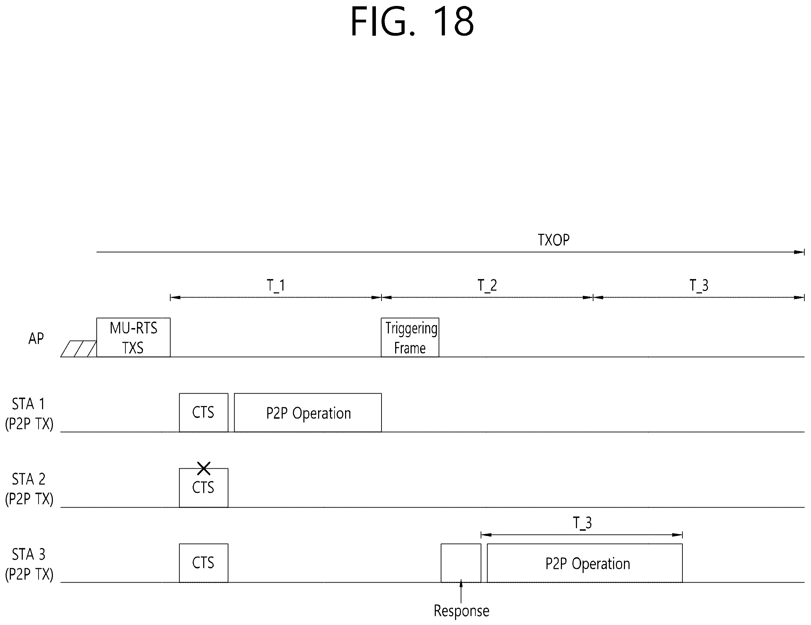

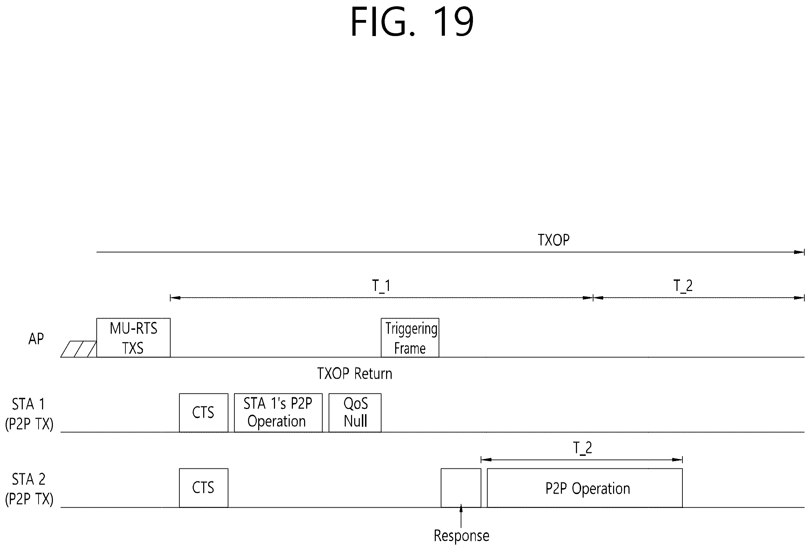

In situations like A and B, the AP needs to notify subsequent STAs assigned to the allocation duration by triggering, and FIGs. 18 and 19 illustrate methods for triggering subsequent STAs.

FIG. 18 shows an example of a CTS failure. The situation in FIG. 18 corresponds to situation A above.

Referring to FIG. 18, STA 1, STA 2, and STA 3 can participate in a multi-user triggered TXOP sharing protocol/procedure, and the AP can transmit an MU-RTS TXS TF to STA 1, STA 2, and STA 3. STA 1 and STA 3 can receive the MU-RTS TXS TF and transmit a CTS response, but STA 2 may not transmit a CTS response due to a BUSY channel. In this case, since T_2 is an unused period, the channel may be wasted during T_2 between T_1 and T _3.

To prevent channel wastage, the AP can transmit a trigger frame during T_2 to enable a subsequent STA (e.g., STA 3) to perform P2P transmission. At this time, the trigger frame (or basic trigger frame) transmitted by the AP may include at least one of a control frame, a QoS data frame, and/or a QoS null frame. STA 3, upon receiving the trigger frame, may respond to it and then initiate P2P transmission earlier than the time allocated by the initial MU-RTS TXS TF. The information regarding T_3 in the trigger frame transmitted by the AP may be changed to a different time/period than before, or may be set to the same time/period as before, as shown in FIG. 18. Therefore, if a specific STA fails to respond with a CTS, an extra period may occur within the TXOP duration initially occupied/acquired by the AP.

FIG. 19 shows an example of a case in which a TXOP return is indicated. The situation in FIG. 19 may correspond to situation B above.

Referring to FIG. 19, when STA 1 has no more frames to transmit during the initially allocated allocation duration, STA 1 may perform a TXOP return (i.e., transmit TXOP return information to the AP) to early terminate the allocation duration allocated to STA 1. Here, the TXOP return may be indicated to the AP by setting the reverse direction grant (RDG)/More PPDU subfield of the HT control field present in the MAC header to 0. In other words, the TXOP return information may indicate a TXOP return and may include the RDG/More PPDU subfield set to 0. Since the time point at which the TXOP return is indicated (or the TXOP return information is transmitted by the STA/received by the AP) is not the time point at which T_2, which was initially allocated to STA 2, starts, STA 2 must wait until T_2. To prevent channel waste while STA 2 waits, the AP can transmit a frame (i.e., a trigger frame) that triggers the P2P transmission of a subsequent STA. The trigger frame (e.g., a basic trigger frame) transmitted by the AP may include at least one of a control frame, a QoS data frame, and/or a QoS null frame. Upon receiving the trigger frame, STA 2 may respond and initiate P2P transmission earlier than the time allocated by the initial MU-RTS TXS TF. Therefore, even if a specific STA performs a TXOP return, as in FIG. 18, a spare period may occur within the TXOP duration occupied by the AP.

As described above, in situations such as A and B occurring in the multi-user triggered TXOP sharing protocol/procedure, the AP can trigger the subsequent STA, as illustrated in FIGs. 18 and 19. In this case, a spare TXOP duration may occur within the TXOP duration. In the case of a single-user triggered TXOP sharing procedure, the AP can immediately return the residual TXOP duration. On the other hand, in a multi-user triggered TXOP sharing protocol/procedure, a method of reallocating the residual TXOP duration to another STA participating in the multi-user triggered TXOP sharing protocol/procedure may be considered.

Therefore, the present disclosure provides a method and apparatus for reallocating the residual TXOP duration to a STA that has failed to perform P2P transmission (e.g., due to a CTS response failure and/or TXOP return) among STAs participating in a multi-user triggered TXOP sharing procedure.

Embodiments of the present disclosure can be applied not only to the multi-user triggered TXOP sharing procedure but also to the single-user triggered TXOP sharing procedure.

In the present disclosure, a STA (e.g., non-AP STA 1 of FIG. 16) that is allocated at least one allocation duration within a TXOP duration for P2P transmission may be referred to as a P2P TX (or P2P TX STA), and a STA (e.g., non-AP STA 2 of FIG. 16) that receives frames from a P2P TX may be referred to as a P2P RX (or P2P RX STA).

In the present disclosure, the names of terms may be replaced with other terms having equivalent meanings, and a STA may include an AP STA and/or a non-AP STA.

In the present disclosure, a trigger frame may include a basic trigger frame and/or a MU-RTS TXS trigger frame.

A basic trigger frame may be used to indicate the start time of an allocation duration of a single STA. For example, a STA may perform transmission (e.g., transmission of a non-TB PPDU to an AP and/or P2P transmission to another STA) during an allocation duration for the STA immediately after receiving a basic trigger frame for the STA. The basic trigger frame may be referred to simply as a trigger frame.

The MU-RTS TXS trigger frame may be used to allocate a TXOP duration (or an allocation duration within a TXOP duration) for at least one STA. The MU-RTS TXS trigger frame may also be referred to simply as a TXS trigger frame.

In the present disclosure, allocating a TXOP duration may include allocating the entire TXOP duration and/or allocating an allocation duration within the entire TXOP duration.

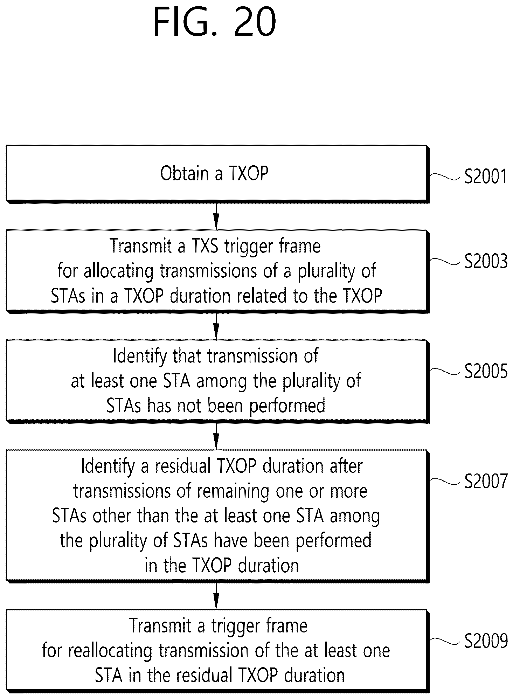

FIG. 20 shows an example of a method performed by an AP for reallocating residual TXOP duration according to an embodiment of the present disclosure.

Referring to FIG. 20, in step S2001, the AP may obtain a transmission opportunity (TXOP).

In step S2003, the AP may transmit a TXOP sharing (TXS) trigger frame for allocating transmissions (or, allocation durations) of a plurality of stations (STAs) in a TXOP duration related to the TXOP.

In step S2005, the AP may identify that transmission of at least one STA among the plurality of STAs has not been performed.

In step S2007, the AP may identify a residual TXOP duration after transmissions of remaining one or more STAs other than the at least one STA among the plurality of STAs have been performed in the TXOP duration.

In step S2009, the AP may transmit a trigger frame for reallocating transmission of the at least one STA in the residual TXOP duration.

According to various embodiments, the TXS trigger frame may comprise a user information list field comprising a plurality of user information fields. Each of the user information fields may be related to a corresponding STA, and indicate an allocation duration in which transmission of the corresponding STA can be performed.

According to various embodiments, each user information field in the user information list field may be sequentially arranged in an order of a corresponding allocation duration within the TXOP duration.

According to various embodiments, the AP may identify that transmission of the at least one STA among the plurality of STAs has not been performed, by identifying that a channel is idle during an allocation duration for the at least one STA.

According to various embodiments, the TXS trigger frame may comprise a multi-user (MU)-ready-to-send (RTS) TXS trigger frame. The AP may identify that transmission of the at least one STA among the plurality of STAs has not been performed, by detecting a clear-to-send (CTS) failure for the at least one STA.

According to various embodiments, the trigger frame may indicate an allocation duration for the at least one STA. The allocation duration for the at least one STA may be allocated within the residual TXOP duration.

According to various embodiments, a length of the allocation duration for transmission of the at least one STA may be proportional to a length of the residual TXOP duration.

According to various embodiments, a length of the allocation duration for the at least one STA indicated by the trigger frame may be a same as a length of an allocation duration for the at least one STA indicated by the TXS trigger frame.

According to various embodiments, a length of the allocation duration for the at least one STA indicated by the trigger frame may be different from a length of an allocation duration for the at least one STA indicated by the TXS trigger frame.

According to various embodiments, the trigger frame may comprise information indicating a change in the length of the allocation duration for the at least one STA.

According to various embodiments, the AP may transmit a trigger frame to initiate transmission of a STA among the remaining one or more STAs after identifying that transmission of the at least one STA has not been performed.

According to various embodiments, the AP may receive TXOP return information indicating that transmission of a STA among the remaining one or more STAs has been completed before an expiration of an allocation duration for the STA. The AP may determine a length of the residual TXOP duration based on the TXOP return information.

According to various embodiments, at least one of the length of the residual TXOP duration or a length of an allocation duration for the at least one STA within the residual TXOP duration may be longer than a length of an allocation duration for the at least one STA indicated by the TXS trigger frame.

According to various embodiments, the trigger frame may comprise at least one of a TXS trigger frame or a basic trigger frame.

According to various embodiments, the transmissions of the plurality of STAs may comprise at least one of transmissions to the AP or transmissions to another STA.

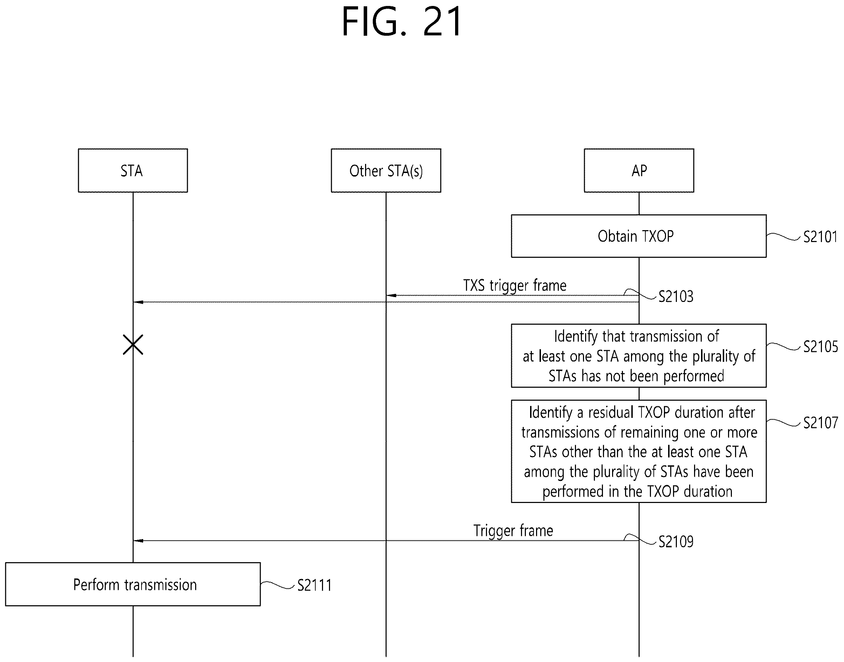

FIG. 21 shows an example of a signal flow between AP and STA for reallocating residual TXOP duration according to an embodiment of the present disclosure.

Referring to FIG. 21, in step S2101, the AP may obtain a TXOP.

In step S2103, the AP may transmit a TXS trigger frame for allocating transmissions of a plurality of STAs including the STA during a TXOP duration

In step S2105, the AP may identify that transmission of at least one STA including the STA among the plurality of STAs has not been performed.

In step S2107, the AP may identify a residual TXOP duration after transmissions of remaining one or more STAs other than the at least one STA among the plurality of STAs have been performed in the TXOP duration.

In step S2109, the STA may receive, from the AP, a trigger frame indicating an allocation duration for the STA within the residual TXOP duration.

In step S2111, the STA may perform transmission during the allocation duration.

Below, a detailed implementation for reallocating residual TXOP duration is described.

### I. MU-RTS TXS Trigger Frame + Simultaneous CTS Response Method

When the MU-RTS TXS TF is applied to a multi-user scenario, TXOP durations can be supported for multiple STAs by individually allocating corresponding user information fields within the MU-RTS TXS TF based on the MU-RTS/CTS protocol defined in 802.11ax (i.e., simultaneous triggering). STAs receiving the MU-RTS TXS TF can simultaneously transmit a CTS in response. At this time, multiple STAs, each receiving different TXOP durations they requested, must accurately know the exact time/allocation duration they were allocated from the AP to successfully perform non-TB PPDU transmission and/or P2P transmission, preventing channel waste. Therefore, each user information field can indicate the TXOP duration time (or allocation duration) as follows.

### 1. User Information Field Configuration Method

To allocate TXOP durations to multiple STAs, the user information list field of the MU-RTS TXS TF may include multiple user information fields. Multiple STAs receiving an MU-RTS TXS TF containing these user information list fields can sequentially calculate the allocation durations indicated by each user information field by decoding the user information list field until they identify the user information field corresponding to their AID. In other words, a STA can determine the start time of its allocation duration by summing up the allocation durations within all user information fields positioned prior to the user information field assigned to it.

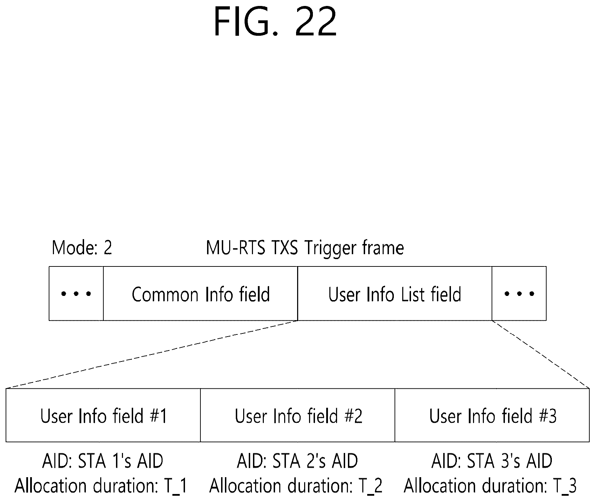

FIG. 22 shows an example of a method for configuring a user information field according to an embodiment of the present disclosure.

Referring to FIG. 22, an EHT AP can allocate allocation duration(s) within an MU-RTS TXS TF set to TXOP sharing mode 2 based on the TXOP duration requested by each STA. STA 1 can perform P2P transmission for a period of time T_1 after/immediately after receiving the MU-RTS TXS TF (same as the single user case) because its corresponding user information field is located at the front of the user information list field. STA 2, which has been allocated an allocation duration of T 2, can perform P2P transmission for a period of time T_2 after T_1, which is the allocation duration of STA1. STA3 can similarly identify the period of time T_3 after (T_1 + T_2) as its allocation duration based on the allocation duration information of STA 1 and STA 2.

The above user information field configuration method can be designed simply from the MU perspective. Furthermore, each STA needs to decode the allocation duration subfield, even if it is not its own user information field, until it reaches the user information field containing its AID. That is, a STA whose user information field is positioned last in the user information list field can decode the allocation duration subfield within all previously positioned user information fields and utilize the decoding result (to determine the start point of its allocation duration).

### 2. Residual TXOP duration Reallocation Method

If multiple STAs simultaneously transmit CTS responses to the initial MU-RTS TXS TF, including each STA's allocation duration, the AP may not be able to accurately determine which STA responded with a CTS. However, based on the user information field configuration method described above, the AP can predict which STA is performing P2P operations at each point/allocation duration. That is, if the AP identifies that the channel is idle during the allocation duration allocated to a specific STA, the AP can determine that a CTS failure has occurred for the corresponding STA.

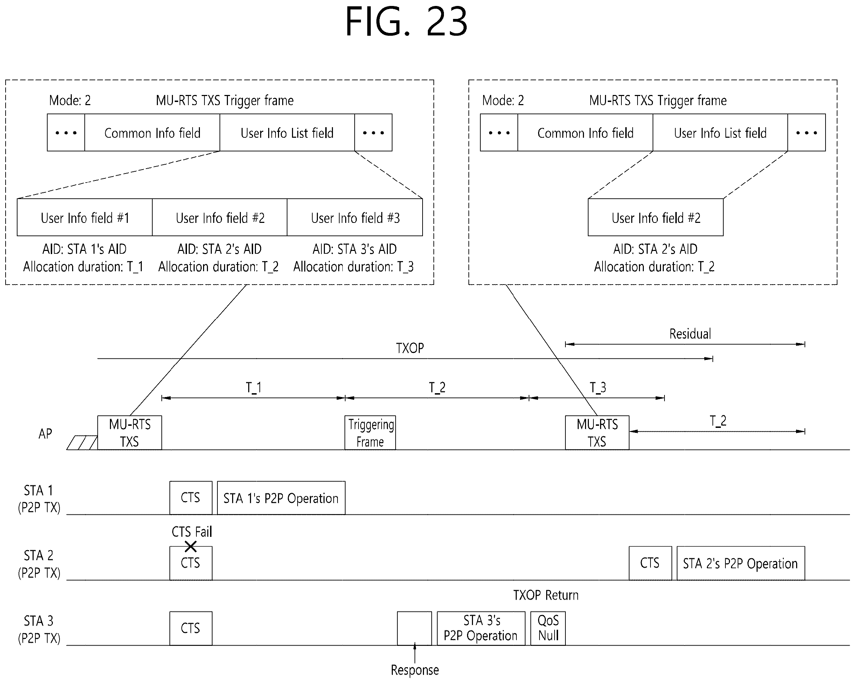

In order to reallocate the residual TXOP duration to a STA that failed to respond to the CTS for the MU-RTS TXS TF transmitted by the AP at the beginning of the triggered TXOP sharing procedure, the AP may transmit an additional trigger frame after the scheduled TXOP allocation duration (or an allocation duration within the TXOP duration) ends. At this time, the trigger frame (or basic trigger frame) transmitted by the AP may include at least one of a control frame, a QoS data frame, or a QoS null frame. For example, for the control frame, the MU-RTS TXS TF may be reused as shown in FIG. 23.

FIG. 23 shows an example of a method for reallocating residual TXOP durations based on an MU-RTS TXS TF according to an embodiment of the present disclosure.

Referring to FIG. 23, an AP may transmit an MU-RTS TXS TF comprising information regarding each allocation duration to sequentially allocate an allocation duration T_1 for STA 1, an allocation duration T_2 for STA2, and an allocation duration T_3 for STA 3 within a TXOP duration. The user information list field of the MU-RTS TXS TF may sequentially include, in order of the allocation durations, a user information field for STA 1 indicating an allocation duration T_1, a user information field for STA 2 indicating an allocation duration T_2, and a user information field for STA 3 indicating an allocation duration T_3.

For the MU-RTS TXS TF, STA 1 and STA 3 transmit a CTS response, but STA 2 may not transmit a CTS response. In other words, a CTS failure may occur for STA 2. The AP may determine that a CTS failure has occurred for STA 2, by identifying that the channel is idle during the allocation duration T_2 assigned to STA 2.

If STA 2 fails to respond with a CTS to the MU-RTS TXS TF transmitted by the AP, resulting in a CTS failure, the AP may transmit a trigger frame to STA 3, the subsequent STA that successfully responded with a CTS, at time T_2, allowing STA 3 to perform P2P transmission first. After this, the AP may reallocate the residual TXOP duration (e.g., T_2') resulting from the time period T_2 that STA 2 was unable to utilize due to the CTS failure to STA 2. At this time, the reallocated T_2' may be the same as or different from the time period (i.e., T_2) at the time of initial allocation. For example, if STA 3 completes P2P transmission earlier than the scheduled time and returns the residual TXOP duration through TXOP return, there may be a residual TXOP duration longer than the time of T_2 allocated to STA 2 among the TXOP durations initially obtained by the AP. The AP can reallocate the residual TXOP duration by transmitting a trigger frame (e.g., MU-RTS TXS TF) to STA 2 when the TXOP sharing for the scheduled STAs is completed (i.e., the P2P transmissions of STA 1 and STA 3 are completed). This allows the AP to support faster P2P transmission of sharing the residual TXOP duration within the currently obtained TXOP duration, if any, without having to perform TXOP sharing again with STA 2 through the triggered TXOP sharing procedure after acquiring a new TXOP.

In FIG. 23, the MU-RTS TXS TF for allocating the residual TXOP duration is an additional MU-RTS TXS TF generated during the triggered TXOP sharing process, and the time period allocated by the MU-RTS TXS TF may differ from the pre-allocated time period. Therefore, a separate triggered TXOP sharing mode may be defined for the MU-RTS TXS TF for allocating the residual TXOP duration. For example, the reserved value (i.e., 3) of the TXOP sharing mode subfield of FIG. 15 may be used to indicate that the residual TXOP duration is allocated. As another example, the reserved bit in the shared information field within the MU-RTS TXS TF can be used to indicate allocation of the residual TXOP duration.

To allocate the residual TXOP duration, the MU-RTS TXS TF can be used, as shown in FIG. 23, but a QoS data frame/QoS null frame can also be used. Since the trigger frame transmitted by the AP in this disclosure can be individually transmitted to STA 2, allocation time/duration information can also be transmitted through the A-Control field of the MAC header. That is, a new type of A-Control can be defined, and the (sub)field of the newly defined type can include allocation duration information.

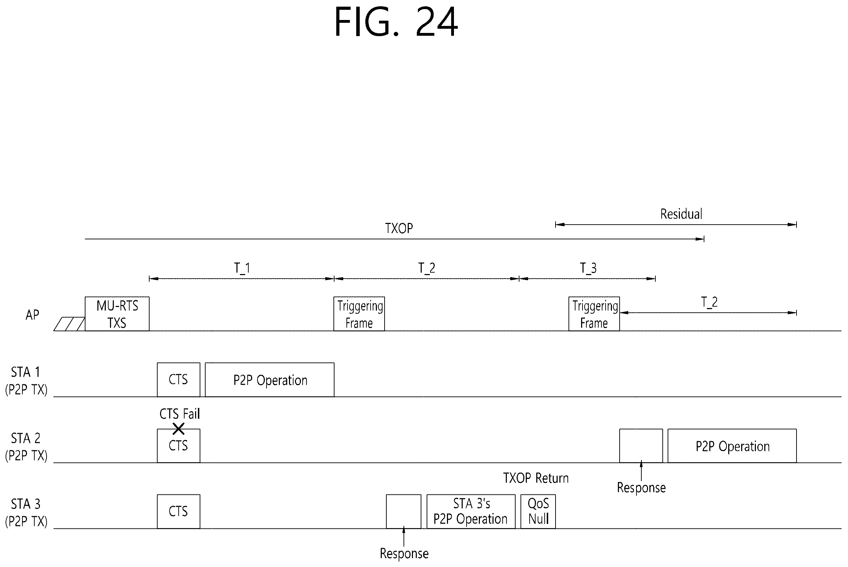

FIG. 24 shows an example of a method for reallocating the residual TXOP duration based on a basic trigger frame, according to an embodiment of the present disclosure. In FIG. 24, an allocation duration T_1 for STA 1, an allocation duration T_2 for STA 2, and an allocation duration T_3 for STA 3 may be allocated within the TXOP duration through the MU-RTS TXS TF.

Referring to FIG. 24, STA 1 and STA 3 transmit a CTS response for the MU-RTS TXS TF, but STA 2 may not transmit a CTS response. That is, a CTS failure may occur for STA 2. The AP may determine that a CTS failure has occurred for STA 2, identifying that the channel is idle during the allocation duration T_2 allocated to STA 2.

If STA 2 fails to respond with CTS to the MU-RTS TXS TF transmitted by the AP, resulting in a CTS failure, the AP can transmit a trigger frame to STA3, a subsequent STA that successfully responded with CTS, at time T_2, so that STA 3 can perform P2P transmission first. After this, the AP can reallocate the residual TXOP duration (e.g., T_2') resulting from the time period of T_2 that STA 2 could not utilize due to the CTS failure, to STA 2. At this time, the reallocated T_2' may be the same as or different from the time period at the time of initial allocation (i.e., T_2). For example, if STA 3 completes P2P transmission earlier than the scheduled time and returns the residual TXOP duration through TXOP return, there may be a residual TXOP duration that is longer than the time of T_2 that was initially allocated to STA 2 in the TXOP duration obtained by the AP. The AP can reallocate the residual TXOP duration by transmitting a trigger frame (e.g., a basic trigger frame) to STA 2 when the TXOP sharing for the scheduled STAs is completed (i.e., when the P2P transmission of STA 1 and STA 3 is completed). Through this, after the AP obtains a new TXOP, it can support faster P2P transmission by sharing a remaining portion of the currently obtained TXOP within the same TXOP duration, without the need to perform TXOP sharing with STA 2 again through a triggered TXOP sharing procedure.

### II. MU-RTS TXS Trigger Frame + CTS Response for Each STA

To support triggered TXOP sharing for multiple STAs, if MU-RTS TXS TFs are transmitted to multiple STAs and multiple STAs simultaneously transmit CTS responses, the AP may not be able to accurately identify which STA transmitted/performed the CTS response. However, through the structure of the user information field, the AP can predict which STA is performing P2P operations at each time occasion. This allows the AP to determine that a CTS failure has occurred for a specific STA if the channel is idle during the time allocated to that STA.

Triggered TXOP sharing for multiple STAs can be supported not only by simultaneously transmitting MU-RTS TXS TFs to multiple STAs, but also by sequentially transmitting MU-RTS TXS TFs to individual STAs and performing CTS responses (i.e., individual triggering). However, even with this individual triggering method, a CTS failure, as in FIG. 18, and/or a TXOP return, as in FIG. 19, may occur.

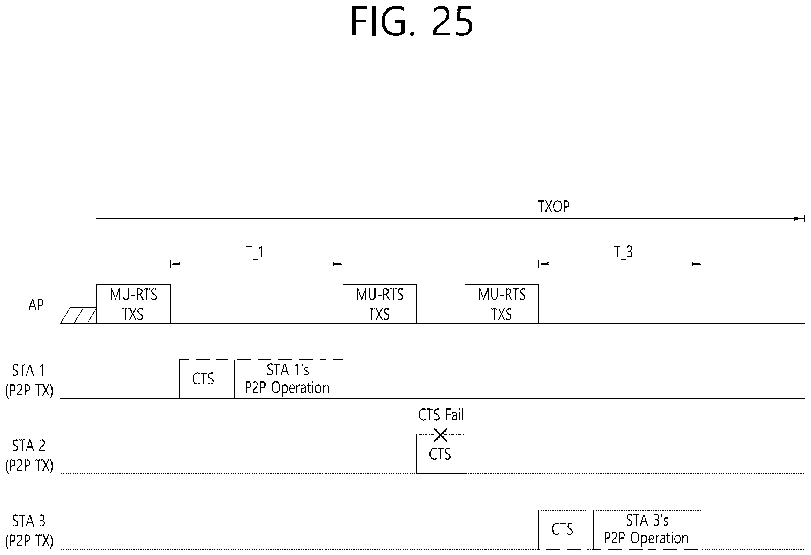

FIG. 25 shows an example of a case where a residual TXOP duration occurs due to a CTS failure in the individual triggering method according to an embodiment of the present disclosure.

Referring to FIG. 25, an AP may transmit an MU-RTS TXS trigger frame to trigger transmission of STA 1 (i.e., not triggering transmissions of STAs 2 and 3). The MU-RTS TXS trigger frame may include a user information field indicating an allocation duration T_1 for STA 1 within the TXOP duration obtained by the AP. STA 1, upon receiving the MU-RTS TXS trigger frame, may transmit a CTS response and perform P2P transmission/operation during the allocation duration T_1. Thereafter, the AP can sequentially transmit MU-RTS TXS TFs for STA 2 and STA 3, sequentially allocating a TXOP duration (or an allocation duration within the TXOP duration) to each STA.

The AP may not receive a CTS response for the MU-RTS TXS TF indicating the allocation duration for STA 2. In other words, the AP may detect a CTS failure for STA 2. For example, if the AP does not receive a CTS response within SIFS after transmitting the MU-RTS TXS TF to STA 2, or if the AP detects that the channel is idle in the allocation duration assigned to STA 2, it may determine that a CTS failure has occurred for STA 2.

If a CTS failure occurs for STA 2, the AP may transmit an MU-RTS TXS trigger frame to trigger transmission of STA 3. Upon receiving the MU-RTS TXS trigger frame, STA 3 transmits a CTS response and can perform P2P transmission/operation during the allocation duration T_3 for STA 3 indicated by the MU-RTS TXS trigger frame.

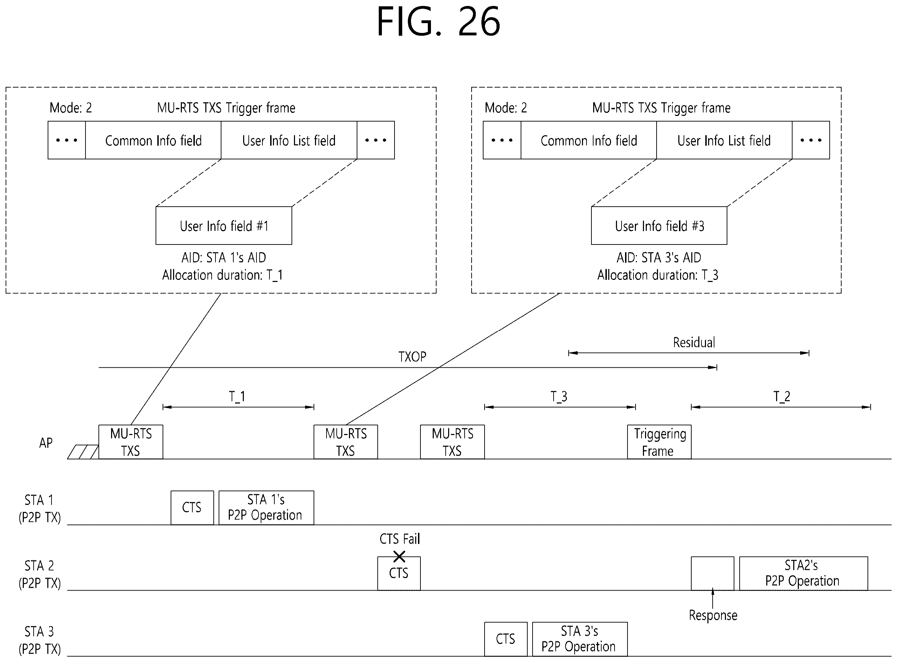

FIG. 26 shows an example of reallocating a residual TXOP duration resulting from a CTS failure in an individual triggering scheme according to an embodiment of the present disclosure.

Referring to FIG. 26, when a CTS failure occurs for the MU-RTS TXS TF individually transmitted to STA 2, the AP may transmit an MU-RTS TXS TF to STA 3, which has not yet been allocated or shared a TXOP duration, so that STA 3 can perform the P2P transmission prior to STA 2. Thereafter, the AP can reallocate the residual TXOP duration resulting from the CTS failure of STA 2 to STA 2, which has not yet performed P2P transmission. The AP can reallocate the residual TXOP duration to STA 2 by transmitting a trigger frame when the TXOP sharing for the scheduled STAs is completed (i.e., when STA 1 and STA 3 are completed). Since the AP reallocates the residual TXOP duration to a specific STA (e.g., STA 2) that was unable to perform the desired P2P operation due to a CTS failure, the STA can promptly complete the P2P transmission requested by the STA within the TXOP duration currently obtained by the AP.

The technical features of the present disclosure described above can be applied to various devices and methods. For example, the technical features of the present disclosure described above can be performed/supported by the devices of FIG. 1 and/or FIG. 13. For example, the technical features of the present disclosure described above can be applied only to a part of FIG. 1 and/or FIG. 13. For example, the technical features of the present disclosure described above can be implemented based on the processing chips 114, 124 of FIG. 1, or implemented based on the processors **111,** 121 and the memories 112, 122 of FIG. 1, or implemented based on the processor 610 and the memory 620 of FIG. 13.

For example, the processor 121 and/or processing chip 124 of FIG. 1 may be configured to execute instructions stored in the memory 122 to implement the method performed by the AP in the present disclosure. The method comprises: obtaining a transmission opportunity (TXOP); transmitting a TXOP sharing (TXS) trigger frame for allocating transmissions of a plurality of stations (STAs) in a TXOP duration related to the TXOP; identifying that transmission of at least one STA among the plurality of STAs has not been performed; identifying a residual TXOP duration after transmissions of remaining one or more STAs other than the at least one STA among the plurality of STAs have been performed in the TXOP duration; and transmitting a trigger frame for reallocating transmission of the at least one STA in the residual TXOP duration.

For example, the processor 111, the processing chip 114 of FIG. 1 and/or the processor 610 of FIG. 13 may be configured to execute instructions stored in the memory 112, 620 to implement the method performed by the STA in the present disclosure. The method comprises: receiving, from an access point (AP), a trigger frame indicating an allocation duration for the STA; and performing transmission during the allocation duration, wherein the AP is configured to: transmit a transmission opportunity (TXOP) sharing (TXS) trigger frame for allocating transmissions of a plurality of STAs including the STA during a TXOP duration; identify that transmission of at least one STA including the STA among the plurality of STAs has not been performed; and identify a residual TXOP duration after transmissions of remaining one or more STAs other than the at least one STA among the plurality of STAs have been performed in the TXOP duration, wherein the allocation duration for the STA is allocated within the residual TXOP duration.

The technical features of the present disclosure can be implemented based on a computer readable medium (CRM) (e.g., non-transitory CRM). For example, the CRM in the present disclosure may comprise at least one CRM having stored thereon a program code implementing instructions executed by at least one processor.

For example, the CRM may be the memory 122 of FIG. 1 and/or a separate external memory/storage medium/disk. The CRM may store instructions that implement the method performed by the AP in the present disclosure based on being executed by a processor (e.g., the processor 121 and/or the processing chip 124 of FIG. 1). The method comprises: obtaining a transmission opportunity (TXOP); transmitting a TXOP sharing (TXS) trigger frame for allocating transmissions of a plurality of stations (STAs) in a TXOP duration related to the TXOP; identifying that transmission of at least one STA among the plurality of STAs has not been performed; identifying a residual TXOP duration after transmissions of remaining one or more STAs other than the at least one STA among the plurality of STAs have been performed in the TXOP duration; and transmitting a trigger frame for reallocating transmission of the at least one STA in the residual TXOP duration.

For example, the CRM may be the memory 112 of FIG. 1, the memory 620 of FIG. 13, and/or a separate external memory/storage medium/disk. The CRM may store instructions that implement the method performed by the STA in the present disclosure based on being executed by a processor (e.g., the processor 111, the processing chip 114 of FIG. 1, and/or the processor 610 of FIG. 13). The method comprises: receiving, from an access point (AP), a trigger frame indicating an allocation duration for the STA; and performing transmission during the allocation duration, wherein the AP is configured to: transmit a transmission opportunity (TXOP) sharing (TXS) trigger frame for allocating transmissions of a plurality of STAs including the STA during a TXOP duration; identify that transmission of at least one STA including the STA among the plurality of STAs has not been performed; and identify a residual TXOP duration after transmissions of remaining one or more STAs other than the at least one STA among the plurality of STAs have been performed in the TXOP duration, wherein the allocation duration for the STA is allocated within the residual TXOP duration.

The foregoing technical features of this disclosure are applicable to various applications or business models. For example, the foregoing technical features may be applied for wireless communication of a device supporting artificial intelligence (AI).

Artificial intelligence refers to a field of study on artificial intelligence or methodologies for creating artificial intelligence, and machine learning refers to a field of study on methodologies for defining and solving various issues in the area of artificial intelligence. Machine learning is also defined as an algorithm for improving the performance of an operation through steady experiences of the operation.

An artificial neural network (ANN) is a model used in machine learning and may refer to an overall problem-solving model that includes artificial neurons (nodes) forming a network by combining synapses. The artificial neural network may be defined by a pattern of connection between neurons of different layers, a learning process of updating a model parameter, and an activation function generating an output value.

The artificial neural network may include an input layer, an output layer, and optionally one or more hidden layers. Each layer includes one or more neurons, and the artificial neural network may include synapses that connect neurons. In the artificial neural network, each neuron may output a function value of an activation function of input signals input through a synapse, weights, and deviations.

A model parameter refers to a parameter determined through learning and includes a weight of synapse connection and a deviation of a neuron. A hyper-parameter refers to a parameter to be set before learning in a machine learning algorithm and includes a learning rate, the number of iterations, a mini-batch size, and an initialization function.

Learning an artificial neural network may be intended to determine a model parameter for minimizing a loss function. The loss function may be used as an index for determining an optimal model parameter in a process of learning the artificial neural network.

Machine learning may be classified into supervised learning, unsupervised learning, and reinforcement learning.

Supervised learning refers to a method of training an artificial neural network with a label given for training data, wherein the label may indicate a correct answer (or result value) that the artificial neural network needs to infer when the training data is input to the artificial neural network. Unsupervised learning may refer to a method of training an artificial neural network without a label given for training data. Reinforcement learning may refer to a training method for training an agent defined in an environment to choose an action or a sequence of actions to maximize a cumulative reward in each state.

Machine learning implemented with a deep neural network (DNN) including a plurality of hidden layers among artificial neural networks is referred to as deep learning, and deep learning is part of machine learning. Hereinafter, machine learning is construed as including deep learning.

The foregoing technical features may be applied to wireless communication of a robot.

Robots may refer to machinery that automatically process or operate a given task with own ability thereof. In particular, a robot having a function of recognizing an environment and autonomously making a judgment to perform an operation may be referred to as an intelligent robot.

Robots may be classified into industrial, medical, household, military robots and the like according uses or fields. A robot may include an actuator or a driver including a motor to perform various physical operations, such as moving a robot joint. In addition, a movable robot may include a wheel, a brake, a propeller, and the like in a driver to run on the ground or fly in the air through the driver.

The foregoing technical features may be applied to a device supporting extended reality.

Extended reality collectively refers to virtual reality (VR), augmented reality (AR), and mixed reality (MR). VR technology is a computer graphic technology of providing a real-world object and background only in a CG image, AR technology is a computer graphic technology of providing a virtual CG image on a real object image, and MR technology is a computer graphic technology of providing virtual objects mixed and combined with the real world.

MR technology is similar to AR technology in that a real object and a virtual object are displayed together. However, a virtual object is used as a supplement to a real object in AR technology, whereas a virtual object and a real object are used as equal statuses in MR technology.

XR technology may be applied to a head-mount display (HMD), a head-up display (HUD), a mobile phone, a tablet PC, a laptop computer, a desktop computer, a TV, digital signage, and the like. A device to which XR technology is applied may be referred to as an XR device.

The present disclosure may have various advantageous effects.

For example, according to the residual TXOP duration reallocation method proposed in the present disclosure, the AP can reallocate the residual TXOP duration that may occur within the current TXOP duration to the STA (where the CTS failure occurred) without the need to acquire a new TXOP, thereby supporting more efficient triggered TXOP sharing.

Advantageous effects which can be obtained through specific embodiments of the present disclosure are not limited to the advantageous effects listed above. For example, there may be a variety of technical effects that a person having ordinary skill in the related art can understand and/or derive from the present disclosure. Accordingly, the specific effects of the present disclosure are not limited to those explicitly described herein, but may include various effects that may be understood or derived from the technical features of the present disclosure.

Claims in the present disclosure can be combined in a various way. For instance, technical features in method claims of the present disclosure can be combined to be implemented or performed in an apparatus, and technical features in apparatus claims can be combined to be implemented or performed in a method. Further, technical features in method claim(s) and apparatus claim(s) can be combined to be implemented or performed in an apparatus, and technical features in method claim(s) and apparatus claim(s) can be combined to be implemented or performed in a method.

## Claims

1. A method performed by an access point (AP) in a wireless local area network (LAN) system, comprising:
obtaining a transmission opportunity (TXOP);
transmitting a TXOP sharing (TXS) trigger frame for allocating transmissions of a plurality of stations (STAs) in a TXOP duration related to the TXOP;
identifying that transmission of at least one STA among the plurality of STAs has not been performed;
identifying a residual TXOP duration after transmissions of remaining one or more STAs other than the at least one STA among the plurality of STAs have been performed in the TXOP duration; and
transmitting a trigger frame for reallocating transmission of the at least one STA in the residual TXOP duration.

2. The method of claim 1, wherein the TXS trigger frame comprises a user information list field comprising a plurality of user information fields, and
wherein each of the user information fields is related to a corresponding STA, and indicates an allocation duration in which transmission of the corresponding STA can be performed.

3. The method of claim 2, wherein each user information field in the user information list field is sequentially arranged in an order of a corresponding allocation duration within the TXOP duration.

4. The method of claim 1, wherein the identifying that transmission of the at least one STA among the plurality of STAs has not been performed comprises identifying that a channel is idle during an allocation duration for the at least one STA.

5. The method of claim 1, wherein the TXS trigger frame comprises a multi-user (MU)-ready-to-send (RTS) TXS trigger frame, and
wherein the identifying that transmission of the at least one STA among the plurality of STAs has not been performed comprises detecting a clear-to-send (CTS) failure for the at least one STA.

6. The method of claim 1, wherein the trigger frame indicates an allocation duration for the at least one STA, and
wherein the allocation duration for the at least one STA is allocated within the residual TXOP duration.

7. The method of claim 6, wherein a length of the allocation duration for transmission of the at least one STA is proportional to a length of the residual TXOP duration.

8. The method of claim 6, wherein a length of the allocation duration for the at least one STA indicated by the trigger frame is a same as a length of an allocation duration for the at least one STA indicated by the TXS trigger frame.

9. The method of claim 6, wherein a length of the allocation duration for the at least one STA indicated by the trigger frame is different from a length of an allocation duration for the at least one STA indicated by the TXS trigger frame.

10. The method of claim 9, wherein the trigger frame comprises information indicating a change in the length of the allocation duration for the at least one STA.

11. The method of claim 1, further comprising transmitting a trigger frame to initiate transmission of a STA among the remaining one or more STAs after identifying that transmission of the at least one STA has not been performed.

12. The method of claim 1, further comprising:
receiving TXOP return information indicating that transmission of a STA among the remaining one or more STAs has been completed before an expiration of an allocation duration for the STA; and
determining a length of the residual TXOP duration based on the TXOP return information.

13. The method of claim 12, wherein at least one of the length of the residual TXOP duration or a length of an allocation duration for the at least one STA within the residual TXOP duration is longer than a length of an allocation duration for the at least one STA indicated by the TXS trigger frame.

14. The method of claim 1, wherein the trigger frame comprises at least one of a TXS trigger frame or a basic trigger frame.

15. The method of claim 1, wherein the transmissions of the plurality of STAs comprise at least one of transmissions to the AP or transmissions to another STA.

16. An access point (AP) in a wireless local area network (LAN) system, comprising:
a transceiver;
a memory; and
at least one processor operatively coupled to the transceiver and the memory,
wherein the memory stores instructions that, based on being executed by the at least one processor, perform operations comprising:
obtaining a transmission opportunity (TXOP);
transmitting a TXOP sharing (TXS) trigger frame for allocating transmissions of a plurality of stations (STAs) in a TXOP duration related to the TXOP;
identifying that transmission of at least one STA among the plurality of STAs has not been performed;
identifying a residual TXOP duration after transmissions of remaining one or more STAs other than the at least one STA among the plurality of STAs have been performed in the TXOP duration; and
transmitting a trigger frame for reallocating transmission of the at least one STA in the residual TXOP duration.

17. An apparatus configured to operate in a wireless local area network (LAN) system, comprising:
at least one processor; and
at least one memory operatively coupled to the at least one processor,
wherein the at least one memory stores instructions that, based on being executed by the at least one processor, perform operations comprising:
obtaining a transmission opportunity (TXOP);
transmitting a TXOP sharing (TXS) trigger frame for allocating transmissions of a plurality of stations (STAs) in a TXOP duration related to the TXOP;
identifying that transmission of at least one STA among the plurality of STAs has not been performed;
identifying a residual TXOP duration after transmissions of remaining one or more STAs other than the at least one STA among the plurality of STAs have been performed in the TXOP duration; and
transmitting a trigger frame for reallocating transmission of the at least one STA in the residual TXOP duration.

18. A non-transitory computer readable medium (CRM) having stored thereon a program code implementing instructions that, based on being executed by at least one processor, perform operations comprising:
obtaining a transmission opportunity (TXOP);
transmitting a TXOP sharing (TXS) trigger frame for allocating transmissions of a plurality of stations (STAs) in a TXOP duration related to the TXOP;
identifying that transmission of at least one STA among the plurality of STAs has not been performed;
identifying a residual TXOP duration after transmissions of remaining one or more STAs other than the at least one STA among the plurality of STAs have been performed in the TXOP duration; and
transmitting a trigger frame for reallocating transmission of the at least one STA in the residual TXOP duration.

19. A station (STA) in a wireless local area network (LAN) system, comprising:
a transceiver;
a memory; and
at least one processor operatively coupled to the transceiver and the memory,
wherein the memory stores instructions that, based on being executed by the at least one processor, perform operations comprising:
receiving, from an access point (AP), a trigger frame indicating an allocation duration for the STA; and
performing transmission during the allocation duration,
wherein the AP is configured to:
transmit a transmission opportunity (TXOP) sharing (TXS) trigger frame for allocating transmissions of a plurality of STAs including the STA during a TXOP duration;
identify that transmission of at least one STA including the STA among the plurality of STAs has not been performed; and
identify a residual TXOP duration after transmissions of remaining one or more STAs other than the at least one STA among the plurality of STAs have been performed in the TXOP duration,
wherein the allocation duration for the STA is allocated within the residual TXOP duration.

20. A method performed by a station (STA) in a wireless local area network (LAN) system, comprising:
receiving, from an access point (AP), a trigger frame indicating an allocation duration for the STA; and
performing transmission during the allocation duration,
wherein the AP is configured to:
transmit a transmission opportunity (TXOP) sharing (TXS) trigger frame for allocating transmissions of a plurality of STAs including the STA during a TXOP duration;
identify that transmission of at least one STA including the STA among the plurality of STAs has not been performed; and
identify a residual TXOP duration after transmissions of remaining one or more STAs other than the at least one STA among the plurality of STAs have been performed in the TXOP duration,
wherein the allocation duration for the STA is allocated within the residual TXOP duration.
